(19) Europäisches Patentamt
European Patent Office
Office européen des brevets

(11) **EP 2 918 459 B1**

(12) **EUROPEAN PATENT SPECIFICATION**

(45) Date of publication and mention
of the grant of the patent:
**20.01.2021 Bulletin 2021/03**

(51) Int Cl.:
**B60T 8/17** *(2006.01)*　　　**B60T 17/22** *(2006.01)*

(21) Application number: **15159066.8**

(22) Date of filing: **13.03.2015**

(54) **METHOD FOR DETERMINING AN ADHESION COEFFICIENT BETWEEN A WHEEL OF A RAILWAY VEHICLE AND A RAIL**

VERFAHREN ZUR BESTIMMUNG EINES KRAFTSCHLUSSBEIWERTS ZWISCHEN EINEM EISENBAHNRAD UND EINER SCHIENE

PROCÉDÉ DE DÉTERMINATION D'UN COEFFICIENT D'ADHÉRENCE ENTRE UNE ROUE D'UN VÉHICULE FERROVIAIRE ET UN RAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2014 EP 14000955**

(43) Date of publication of application:
**16.09.2015 Bulletin 2015/38**

(73) Proprietor: **Bombardier Transportation GmbH**
**10785 Berlin (DE)**

(72) Inventors:
• **Plamper, Stefan**
**13467 Berlin (DE)**
• **Viereck, Uwe, Dr.**
**24116 Kiel (DE)**

(74) Representative: **Zimmermann & Partner**
**Patentanwälte mbB**
**Postfach 330 920**
**80069 München (DE)**

(56) References cited:
**WO-A1-2006/113954　　WO-A1-2013/034720**
**WO-A2-2009/060075　　WO-A2-2010/069520**
**WO-A2-2013/034698　　DE-A1- 3 516 399**
**US-A- 5 735 579　　US-A1- 2001 029 419**
**US-A1- 2005 012 386　　US-B1- 6 549 842**

**Description**

## I. Brief description of aspects of the invention

### 1. Technical problem solved by aspects of the invention

The Guidelines Ri1 9150107A01 describe the conditions under which a railway vehicle conductor has to be prepared for a reduced coefficient of friction between wheel and rail and how to respond to it. The detection of a decreased coefficient of friction, and thus the keeping of a safe stopping distance, is dependent on the experience of the railway vehicle conductor. The same holds true for the proper response of the railway vehicle conductor to a detected reduced coefficient of friction. The manual handling procedure results in non-uniform braking characteristics.

Thus, the operation of rail vehicles with reduced friction coefficients is specified in the Guidelines Ri1 9150107A01. The railway vehicle conductor receive training enabling them to ensure safe operation. The patent application WO2013/034698 A2 describes an adhesion determination for a railwav vehicle.

### 2. Solution according to aspects of the invention and advantages thereof

Objectives of the present invention are achieved by the features of independent claims 1 and 9. Aspects of the invention include:

1. The coefficient of friction may be determined automatically or on request e.g. from the railway vehicle conductor.
2. The system for determining the coefficient of friction (adhesion value) sends an indication of reduced friction coefficient (warning of low adhesion value) to the railway vehicle conductor under respective conditions (e.g. if the determined friction coefficient is below a predetermined threshold value). Optionally, the warning may be subdivided into a warning for low adhesion value and a warning for extremely low adhesion value.
3. Data are recorded for adhesion values along the train track, and/or are automatically transmitted to a dispatcher / a remote control center which may be situated outside of the train at a stationary location.

In the previous solutions, the estimation of the coefficients of friction was subjective. Prior to a braking operation the conductor had no way to determine the coefficient of friction. His assessment was based on experience and on previous skidding, wherein the vehicles behave in a vehicle type specific manner during the skidding, whence the results cannot necessarily be transferred or used across different vehicle types.

According to the invention, by measuring the coefficient of friction, an objective evaluation of the braking performance of the vehicle is enabled regardless of the individual conductor's experience. The results can lead to well-defined operational instructions for the conductor, and thus provide an improved support for the conductor's actions. Furthermore, the determined values of the friction coefficient can be stored in order to generate and/or obtain information about the route network, and to provide an early warning of following vehicles.

### 3. Additional details regarding an early warning system at reduced adhesion coefficient according to a preferred aspect of the invention

**Problem:** Reduced adhesion coefficients, in particular in autumn, frequently lead to the exceedance of the braking path. For minimizing the risk of exceedance of the braking path, the driver is requested to look for indications of a small adhesion coefficient and, under consideration of the operation, react with a quick-braking instead of a service braking. Further, the traffic controller should be informed about the routes with reduced adhesion coefficient. Indications for a reduced adhesion coefficient are visual impressions of the route and sliding actions at starting. All described indications are not unambiguous and not always recognizable.

Thus, the subjective decision of the driver is relevant for having a braking path, which is as short as possible at reduced adhesion coefficient.

**Solution according to aspects of the invention:** By providing a measurement or determination of the adhesion coefficient before the actual deceleration of the vehicle, the driver is informed about the adhesion coefficient. The measurement and/or determination of the adhesion coefficient may be started, for instance in especially endangered time periods, in a cyclic and automated manner, or on demand of the driver. The result of the determination and/or the measurement of the adhesion coefficient is a signal warning about extremely low adhesion coefficients. The driver may adapt the driving manner to the adhesion coefficient conditions. Further, subsequent vehicles may be warned about low adhesion coefficients by using an operational warning system. Therefore, there is the possibility to reliably operationally react on reduced adhesion coefficients and avoid exceedance of braking paths.

An aspect of the invention is based on the following general principle: The adhesion coefficient can be derived from a braking, if only the brakes of one brake set, approximately two brake sets, are activated. The activation of the brake is performed outside of a braking of the vehicle within a manually or automatically requested adhesion coefficient test. The adhesion coefficient between rail and wheel can (simplified) be derived from a deceleration of the vehicle, and via an extended model from the change of the speed of the wheel set, the brake force, and the weight force acting on the wheel, respectively. The resulting adhesion coefficient may be displayed in three categories with respective instructions for the driver.

For implementing a continuous warning system, the brake may be, similar to the winter brake, periodically activated. The activation of only one wheel set leads to a low, and for the driver merely noticeable deceleration of the vehicle.

**Preferred field of application:** Vehicles including a wheel set related or bogie related brake force generating system

**Short description of the drawings**

The elements in the drawing are shown in relation to each other and are not necessarily to scale. Same reference numbers refer to same parts. The accompanying drawings relate to embodiments of the invention and are described as follow:

Fig. 1    shows a brake table for 1000m pre-signaling distance;

Fig. 2    shows an expected adhesion values depended on speed and rail conditions;

Fig. 3    shows an example for adhesion distribution over all four seasons;

Fig. 4    shows an allowed vehicle speed as a function of brake power within 1000m pre-signaling distance;

Fig. 5    shows the maximum deceleration as function of brake power within 1000m pre-signaling distance;

Fig. 6    shows the speed as function of signaling distance at different brake power;

Fig.7    shows the speed as function of brake initial speed at different brake power (e. g. in case of interferences);

Fig. 8    shows the movement pattern of a train ride;

Fig. 9    shows the force- and torque relationships at the wheel set; and

Fig. 10    shows an exemplary system outline for determining the adhesion coefficient.

**II. Detailed description of aspects of the invention: Approaches for core safety functions of a railway brake system**

**0. Overview**

On trains different incidents lead to the activation of an emergency brake despite the fact that the present safety target might be different. Due to the application of the emergency brake the reaction of the train, in this case the deceleration is ideally the same. E. g. the ATP system which is related to the infrastructure is initiating a penalty brake using the emergency brake channel to ensure a safe stop before approaching the main signal. In some applications also a penalty brake is initiated to prevent damage from the braking equipment in case of severe malfunction (e. g. hose burst protection for the parking brake). An emergency brake initiated by the driver is targeting to prevent hazards, e. g. to avoid collisions. An emergency brake initiated by the passenger alarm system is targeting to protect the passengers, e. g. in proximity to a station.

This brief overview is indicating that different safety targets are treated in a common way. For some of these incidents highly reliable deceleration rates are necessary i.e. to ensure brake distances within the infrastructure demands. Other incidents require the highest possible deceleration independent of a reproducibility i.e. to avoid crashes.

Actual trains achieve their minimum brake distance basing on preset parameters. To achieve the shorted brake distance physically possible the emergency brake would need to be parameterized based on the actual operational parameters observed.

## 1. Introduction

Railway vehicles were developed as independent transport systems basing on the interaction between track (rail) and vehicle. The wheel-rail contact facilitates track guidance, transfer of traction- and braking forces and transfer of load. Without a track railway operation is impossible. This situation leads to the development of an exclusive infrastructure which is not being shared with any other traffic system. Other forms of traffic are explicitly excluded. This exclusivity is partly further expanded by reserving track sections for single trains only. A closed system is created which has a railway specific signaling system for control. Basing on these preconditions railway brake systems were optimized according to the need of the railway transport. The organization of railway traffic basically means the operation of vehicles within a exclusive network. This network is characterized by special pre-defined braking distances which give the basis to derive the core safety functions of the vehicle. Due to the fact that railway traffic can never be a complete exclusive system, interferences might disturb the operation. Interferences have multiple root causes e. g. bad weather conditions. The negative operational impact of interferences might be further increased by operational factors, high vehicle speed required, short train sequence or ambitious design of schedules. By designing the vehicle according to known brake distances and a low level of interferences the operational staff assumes responsibility for continuation of safe operation.

This essay describes basing on the example of traction units in Germany alternative approaches of core braking function to provide support to the staff to fulfill their operational obligations. The approaches can be transferred to other vehicles operating in other national railway systems. The first part is dealing with the aspect of brake distance safety of railway vehicles. Therefore the brake system design and the dependencies of vehicle and infrastructure are explained. The second part is discussing interferences which are causing disturbances and mitigation measures contained in standard, norms and operational rules. Finally alternative approaches are presented to further increase the operational safety.

## 2. Brake system design

### 2.1 Brake system equipment

Initially railway traffic was shaped by the loco-coach arrangements. Motorized locos with concentrated equipment haul passive coaches. This lead to high flexibility for adaption of the capacity to transport needs.

For realization of this compatibility standardize interface for draw gear and the brake system were required. The indirect automatic pneumatic brake gained acceptance. Core element of this system the brake pipe (BP) for transmission of the brake command throughout the train, air reservoirs for storage of the brake energy, a distributor and a relay valve for conversion of the brake command into a brake cylinder pressure, and finally the mechanic unit transferring the brake application pressure into a braking torque. This system allows the transfer of an analogue brake command, in this case the brake pipe pressure and the transfer of a digital signal when the brake pipe is de-pressurized for application of the maximum brake force. The brake distances achievable are a function of this maximum brake force and the vehicle masses in combination with a dry rail. This together is defined as braking power and can be expressed as brake percentages. Modern railway vehicle are still using brake system architectures basing on these historic principles. An electric emergency brake loop and a data bus system are assuming the roles of the brake pipe while the other equipment basically remains. An emergency brake loop following an energize to release principle commands the maximum brake force and the analogue signals are transferred via the data bus. Despite shorter times for signal transfer this results in nearly the same vehicle reaction. In service braking cases an adjustable brake force is commanded and in quick braking cases a maximum brake force demanded.

### 2.2 Track Signalling

The signaling for control of railway operation needs to work reliably independent of weather conditions and season. In addition a manual commanding of railway vehicles requires a good visibility of the signals. Due to adhesion available and the related deceleration of railway vehicles which is low in comparison to street cars it is essential to have pre-signals indicating the status of the main signals to allow higher speeds, otherwise high speed would not be possible. Trains have to stop in front of a red main signal. An additional margin is provided between the signal and the final collision point. For pre signals which are not very well visible there are further outer distant signals. Basing on this status indication there is an operation possible which is guided by the signaling while the driver is responsible for achieving the brake distances required and maximum speed allowed. In addition automatic protection systems supervise the vehicle behavior. Therefore within the track there are switchable position signals installed allowing automated speed supervision. When exceeding the maximum speed of the vehicle which is related to the available brake power of the train the maximum brake force is commanded. This is valid up to a maximum speed of 160 km/h. Above this speed the operation is supervised by train protection system working continuously. The general safety targets remain the same.

**2.3 Brake distance safety of railway vehicles**

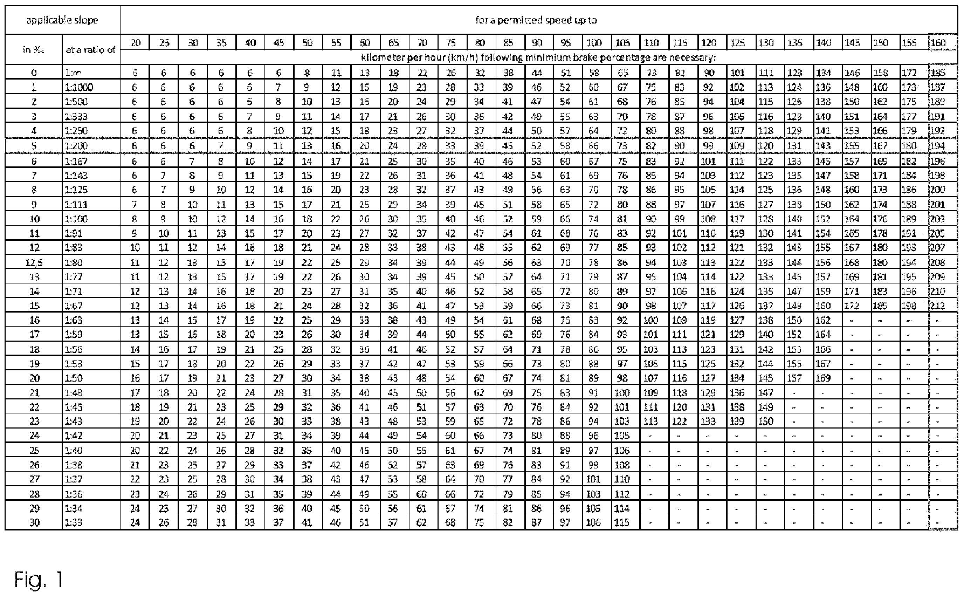

Related to certain pre-signaling distances there are brake tables available (see Fig. 1), showing the required brake percentage (corresponding with the brake power) as a function maximum speed and track gradient. From physical point of view the brake tables contain the energy of the vehicle (as the sum out of kinetic energy related to maximum speed and potential energy as a function of the gradient) and the brake force required to convert these energy to stop safely in before reaching the main signal. Related to a railway network there are minimum brake percentages required which are driving the design of the brake system. Evidence regarding presence of the required brake power on the vehicle usually has to be given by testing. Up to maximum vehicle speed tests with maximum brake force on dry rail need to be carried out.

Brake distance safety given when the pre-signaling distance is respected when applying maximum brake effort. This is illustrated by the marked cells in fig. 1: to be allowed to drive with speed of 160 km/h within a 1000m pre-signaling distance a brake percentage value of 194 is required, covering also a 5‰ decline. This is equivalent to a brake distance of 860 m on level track. Within maximum allowed gradient the brake distance is enlarged by 5 % to 903 m. A brake distance margin of 97 m remains. This margin should ensure that all vehicles of this class are respecting the maximum allowed brake distances. This margin is necessary to cover deductions resulting from

- methodology of brake power evaluation during type testing, especially influenced by scattering of disc-pad friction coefficient,

- possible tolerances e. g. of pressures and filling times for the series trains,

- exceeding of tolerances in between maintenance intervals,

- equipment failing during braking,

- environmental impact.

The brake power evaluation bases on the average of four measured brakes distances achieved, while the values shall not disseminate more than 3% around the standard average. Other trains of this class will not be type tested anymore. Respecting pre-defined tolerances (pressure and propagation timing) ensures that the results from the type tested trains can be transferred to the series trains. This also means that the brake distances of other trains of this class might deviate according to these tolerances from the result of the train type tested. Checking if the settings are still within tolerances is an element of the maintenance regime. The setting might change slightly between the maintenance intervals. The intervals are defined in a way so that the changes of settings do not impact the brake distance safety in a negative way. The brake tables together with all rules of the operator ensure for normal operation without interferences that the brake distances are respected. It is assumed that the brake force can be transferred between wheel and rail. The possibility of brake force transfer is described by the adhesion coefficient. This is the quotient of transferrable tangential force in driving direction and weight force on the wheel. It is dependent on parameters of materials, geometry, environmental impact and dynamic values e. g. speed. The deceleration of trains where all wheel sets are braked evenly is proportional to the adhesion.

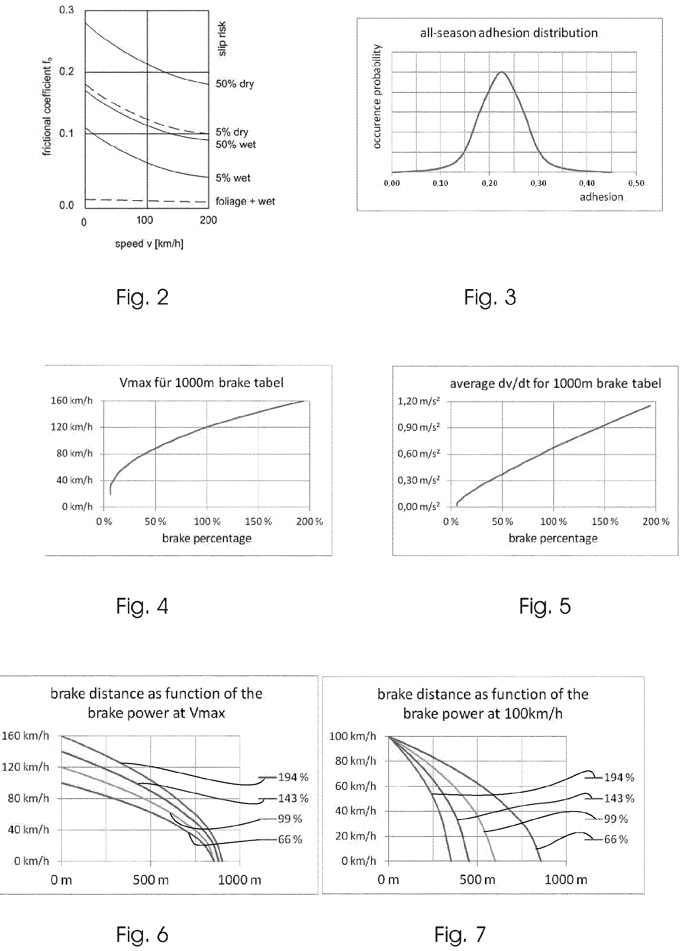

At dry rail adhesion coefficients up to 0,5 are possible, related to a theoretical deceleration of 4.9 m/s$^2$. The more the rail is contaminated with humidity or dirt the more the adhesion coefficient decreases. Under extreme conditions (e. g. in autumn) the adhesion coefficient might be below 0.03, see figure 2. This value corresponds with a deceleration of 0.29m/s$^2$ and a braking distance of 2521 m when initial speed was 140 km/h. Within a pre-signaling distance of 1000m the critical point (collision hazard) would be exceeded. In reality such low adhesion conditions appear very rarely. The statistical adhesion theory describes this behavior. Figure 3 is showing qualitatively adhesion distributions over all four seasons. In case that the available adhesion is lower than the required one the brake force cannot be transferred between wheel and rail and the wheel starts to slide. That is why the brake force needs to be limited. Longer brake distances compared to the brake distances corresponding with the brake table and related brake percentage are the consequence. To avoid this case the signaling distance and initial braking speed need to be selected such that the probability of exceeding minimum required adhesion is very low. As maximum allowed adhesion the value of e. g. 0.15 per wheel set has operational acceptance basing on long operational experience.. This value corresponds with an distance averaged deceleration of 1.1 m/s$^2$. The difference to the maximum allowed 1.4 m/s$^2$ achieved with an adhesion coefficient of 0.15 are related to a brake propagation time and design margin covering system tolerances e. g. the behavior of the disc-pad friction coefficient.

To consider possible brake distance extensions which might occur e. g. due to bad weather conditions in advance before approaching the hazardous point there is an additional slip through margin. A typical slip through margin behind a main signal is 250 m. For the 1000m pre-signaling distance system a brake distance extension of 25% does not cause a stop within the critical section. The compliance of the brake system with this requirement is being validated during type testing. There for liquid soap is put on the rails to simulate low adhesion conditions with coefficients between 0.05 and 0.08. An evidence regarding brake distance extension for adhesion coefficients below 0.05 is not requested.

In addition to the exclusion of other traffic participants regarding the use of the infrastructure the limitation of the brake power during vehicle design is another measure to reduce interferences within a closed traffic system. Nevertheless, such kind of interferences cannot be avoided completely due to the openness of the system regarding environmental impact. In addition there are requirements to the minimum brake power of the service brake, also derived from pre-signaling distance. In normal operation the driver needs to stop the vehicle by applying the service brake to come to a stop in front of the main signal while the quick braking function applying maximum brake force is the last instance for case when the deceleration is not sufficient. Typically the for modern railway passenger transport the deceleration of the full service brake is in a range of 0.9...1 m/s$^2$. The emergency brake needs to achieve a higher average deceleration compared to the service brake. That is why the adhesion utilization cannot be reduced further to achieve more brake distance safety. Nevertheless by applying a conservative brake system design brake distance overshoots due to negative environmental impact can be avoided as far as possible. The safety of a railway system bases mainly on the avoidance of interferences by exclusive infrastructure and by consideration of possible interferences during design. To guarantee the safety of a railway system preconditions contained within the brake tables need to be respected. This includes also special infrastructure related measures e. g. tree cutting and track cleaning after contamination.

### 2.4 Drawbacks of a conservative brake design

Operation without any interference is not possible. Tracks are also not completely exclusive. In addition to a lot of protected level crossings still a lot of unprotected level crossings exist which are potential points of hazard. Extreme weather condition might lead to blocked rails e. g. when trees fall down. Different to braking within the known pre-signaling distance the vehicle need to stop within the shorted brake distance achievable irrespective of the rail conditions. However, the driver's reaction is limited to the maximum brake force possible which is related on the signaling distance. This contradiction might lead to avoidable accidents. This is described by analyzing the brake power in case of single point failures: Having brake power of 194 brake percentages vehicles in Germany are allowed to commute at 160 km/h speed within the 1000 m pre-signaling distance. In case of discovered failures brake equipment is deactivated and the brake power is reduced, resulting in a lower allowed maximum speed. Figure 4 is showing the relation between brake power and maximum allowed speed. The curve results from a nearly linear dependence between brake power and deceleration see figure 5. That means the maximum allowed initial braking speed is proportional to the square root of the brake power when the brake distances stays the same. This approach enables a vehicle with very low brake power to be operated safely within the given signaling system.

Fig 6 is showing ideal braking courses for braking with different brake power.

In case of isolation of single brake units the brake power is reduced. This leads to extended brake distances for the same initial speed. Fig. 7 is showing braking from 100 km/h initial speed. The brake distance achieved results from the available brake percentage. This brake distance is the relevant one to be able to react on interferences requiring an immediate stop within the pre-defined pre-signaling distance. The brake distances and the safety when the quick braking is demanded manually are resulting from brake power installed. This example is showing that the safety is related to the maximum speed allowed. Braking initial speed below the maximum speed allowed are respecting the pre-signaling distance anyway. As far as the system is a closed one and interferences can be avoided as far as possible this dimensioning approach is sufficient as confirmed by operational experience.

### 3. Brake system design considering interferences

Main purpose of a brake system is the transfer of kinetic and potential energy into other forms of energy. For the conversion it needs to be distinguished between service braking, quick-, emergency- and penalty-braking. Service braking is applied to achieve a stop at a targeted stopping point (e. g. stations) or when a signal is at red. Also it is used to adapt the speed to the track speed allowed, e. g. to keep the speed in a decline. Main requirement to the service brake is to achieve the energy conversion with the lowest amount of wear possible in a reliable way and easily operable. The purpose of quick, emergency- and penalty braking is to avoid collisions and to minimize damages. Multiple root causes are possible. According to actual standards and rules all these root causes are leading to the same vehicle reaction finally, in specific commanding a quick braking resulting in the same brake force always.

### 3.1 Emergency braking

According to actual operational rules, see [2] Rolling M.: Bremsen im Betrieb bedienen und prüfen, Richtlinie 91501, DB, 11.12.2011 in case of a hazard the driver has to command a quick-braking.

A hazard is present when:

- adhesion is to low during braking,
- braking is initiated lately,
- the brake response is Insufficient due to irregularities of equipment.

When the adhesion is to low besides the application of quick braking measures to enhance the potentially low adhesion need to be applied (e. g. sanding). The emergency brake deceleration which is higher than the service brake deceleration increases the probability to respect the brake distance allowed supported by enhanced adhesion due to sanding.

A late application of service braking is a braking mode which starts at driving with minimum brake percentage when a pre-signal is demanding to stop. The related brake response is a function of the brake percentage. Normally the speed needs to be reduced before approaching the pre-signal to be able to stop the vehicle by application of the service brake. When commuting with maximum speed as a function of the available brake percentage the maximum brake distance allowed can only be achieved by application of a quick-(emergency) brake.

In case the driver discovers an insufficient brake response he is forced to apply all available brake systems. Such systems are dynamic brakes, magnetic track brakes and parking brakes. The target of such a quick braking is to limit the brake distance extension; damages to the train are of secondary importance. E. g. applying the parking brake which is very often realized as a spring applied system at speed to transfer brake force between wheel and rail cannot be controlled and wheel flats might be the consequence. Partly it is not possible to follow the operational instructions completely; e. g. the system inhibits the application of the dynamic brake when maximum pneumatic brake force is commanded. This is implemented to inhibit not demanded traction. Activation of all brake systems installed is more helping to utilize all redundancies rather than increasing the brake force unless there are other systems not accountable. A failure of brake units during a service braking can be mitigated by applying a quick brake application. A failure of brake units during an emergency brake cannot be compensated and immediately leads to a brake distance extension. This is not contained within the margins of the brake tables. In case of a low degradation this scenario can be compared to braking with low initial adhesion which is covered by an additional brake distance margin of 25%. A single point failure shall not lead to pass the hazard point.

The penalty braking is an automatic function in case of unintended train separation or commanded by automatic train protection. As described already in the signaling chapter track magnets of the automatic train protection systems transfer information to the vehicle which is then monitoring the speed. A penalty braking is initiated when the maximum allowed track speed is exceeded. The brake power applied is the same as applied for quick braking. More brake power is not necessary because just a little operational error might activate the automatic train protection system and the brake distance safety is already incorporated within the signaling distance and the sliding through margin. Other root causes for activation of a penalty brake might come from supervision systems of the vehicle itself, e. g. in case of a jammed brake actuator to reduce fire hazard. Penalty braking is applied then to achieve a safe train status and to align the vehicle reaction throughout the train consists. Penalty braking caused by supervision systems are the last instance within a stepped hierarchy of failure reaction possibilities. Especially inside tunnels the hazard caused by stopping the train might be higher compared to the continuation of driving. That is why penalty braking need to be assessed carefully and should only be used in rare cases. The indication of the present failures to force the driver to react might be a reasonable approach. In most cases braking with maximum available brake force is not necessary. Additional damages need to be avoided.

Such an approach is applied for emergency braking. Emergency braking can be initiated by the passengers (passenger alarm) but it does not necessarily lead to immediate brake activation. After departing from a station the driver has the opportunity to override the passenger alarm to avoid stopping at unsuitable location, e. g. bridges or tunnels (as far as an passenger alarm override system is provided). Purpose of the passenger alarm system is to limit the damages. This could mean either to achieve the shorted brake distance possible at a platform without limitation of adhesion or the continuation of driving to stop safely later on.

The analysis of different root causes for hazardous cases results in different requirements for quick, emergency and penalty braking. Questions should be investigated as follows:

### What is an appropriate failure reaction?

It needs to be investigated whether brake distance, speed, deceleration are relevant and if there is a minimum brake distance to be respected, a maximum speed or a minimum deceleration to be met. In case of the automatic train protection system it is the minimum brake distance which is covered by the signaling distance.

**What level of safety and reliability needs to be achieved for the failure reaction?**

Due to the dependency of braking from force transfer between wheel and rail impacted by weather conditions present the brake response is dependent on the statistical adhesion distribution. In most of the cases a very good brake response is possible. This could be utilized in cases when the shorted brake distance ever is necessary to avoid accidents. When brake distances are already known during train design the realization has to base on a limited utilization of adhesion.

**What kind of operational measures are acceptable after failure reaction?**

A failure message and an appropriate driver's reaction are precondition for railway operation with low amount of interferences. Braking within the predefined brake distance should allow the continuation of operation later on, because the brake system design can respect a thermal margin to do this. To avoid severe accidents (passenger injury) all braking system need to be applied. In this case damages to the vehicle are to be taken into account so that the vehicle has to be taken out of service finally. Example for such a case is the application of the parking brake at speed to counteract against poor brake response. In rare cases damages to the infrastructure should be acceptable, too, especially when injuries to passengers can be avoided.

**3.2 Brake system changes for adapted failure reaction**

This chapter is targeting to present possible technical changes for the brake system to be able to provide an appropriate failure reaction. There are hazards which:

- require immediate stopping to prevent collision, derailment and passenger injury,

- impact the brake system safety e. g. loss of brake force, reduced adhesion and braking lately initiated,

- lead to a damage later on.

An immediate vehicle stop requires commanding the maximum available brake force. It needs to be limited only to avoid that passengers are becoming injured. From now on this braking mode will be called emergency brake in opposite to the quick braking mode. The related brake force is not necessarily basing on a closed loop control. Enhancing the brake force could be achieved by commanding to brake systems in parallel, by introduction of another brake level or by introduction of an additional brake signal path. Proceeding like this requires for sure that no additional hazards are created, e. g. passengers falling down due to very high deceleration and jerk. Historically only train wide brake signal paths exist. The introduction of a second path and a related additional handle would allow providing additional brake force. Electrically driven vehicles have an electrodynamics brake system on board which is normally deactivated during emergency braking because it is not accountable to the brake weight. Accountable in this context means safe and available. Precondition for availability is the presence of brake resistors to convert kinetic energy into heat or the recuperation of the energy into the centenary. The accountability is not relevant if collision or derailment needs to be avoided. In addition all other available system should be activated, e. g. sanding devices or magnetic track brakes to increase the level of available adhesion.

To guarantee brake distance safety within the defined pre-signaling distance the system could be designed for higher brake power than necessary. Additional measures are not necessary. In case that the brake distance extension due to loss of brake force is backed up by a sliding through margin the driver might react by applying the emergency brake. Support for the driver could be provided by automatic transition from service braking to emergency braking, as long as he does not confirm the changed brake power. Actual trains provide such kind of online-monitoring system which immediately update the result for the available brake power when failures with relevance for the brake power are discovered. To mitigate brake distance extensions resulting form decision hurdles and reaction times it is possible to apply a penalty braking. In case that the brake distance extension is not covered b y a slide through margin an emergency brake application should be the reaction. Also these ones could be initiated automatically. After application of emergency braking the vehicle functions need to be checked in advance of continuing to drive. This is not necessary in case of quick braking.

The basic measures to ensure brake distance safety for reduced adhesion is the reduction of brake power for quick braking and penalty braking initiated by train protection systems, resulting in a reduction of maximum allowed speed, the application of wheel slide protection systems and additional technical device to increase the level of available adhesion, e. g. sanding devices and magnetic track brakes. Actual trains have effective wheel slide protections systems on board. The control the brake force in a way so that not all brake energy is converted into heat by installed brake equipment, a share of the energy is used for conditioning of the wheel rail contact. That means wheel, rail and the medium in between wheel and rail is conditioned. This is working as far as energy can be introduced into the contact patch. In case of extreme low adhesion to avoid blocking of the wheels the brake force needs to be lowered in a way so that a conditioning is not possible anymore. In case of extreme low adhesion brake distance safety is not possible anymore. Typical cases occur e. g. under autumn conditions when leaves are falling down and wheels mill them onto the rail heads. Humidity converts this solid layer into a sliding layer which cannot be penetrated by the weight force of the train itself. Also in such cases the driver is forced to command an emergency brake in combination with sanding.

To avoid significant brake distance extensions either the available adhesion needs to be increased or the braking initial speed needs to be reduced. The adhesion can be improved from track side or by technical devices on the vehicle. When on short sections only adhesion is reduced a higher brake force might be sufficient to compensate the brake distance extension. The following measures are possible:

- measures on infrastructure side, reduction of low adhesion probability,

- adapted vehicle design, design allowing adhesion optimization independent from wheel slide protection system,

- online monitoring of adhesion

   ◦ improved infrastructure register for adhesion optimization in critical sections

   ◦ reduction of probability of critical brake distance extension due to extreme low adhesion by automated vehicle adhesion monitoring functions,

- season dependent schedule, additional margins in schedule e. g. in autumn by maximum allowed speed,

- brake force enhancement; avoidance of brake distance extensions in case of extreme low adhesion.

Infrastructure measures, infrastructure register and autumn schedules are within the responsibility of the operator. Data for optimization can be collected by measuring adhesion on vehicle side. A possible approach will be presented within the next chapters.

Accepted adhesion improvements measures are sanding devices and magnetic track brakes. A vehicle design optimized for extreme low adhesion needs to consider arrangement, total number and commanding approach for these systems. Sanding is providing additional contact area to transfer brake forces even if a sliding layer is present between wheel and rail. The effect of sand is decreasing when several wheels have been rolling over it. That is why the absolute number of sanding devices and the amount of sand provided is impacting the enhancement of available adhesion. A layer of sand between wheel and rail might impact the track occupation supervision systems negatively due to the isolation effect of sand. That is why the sand is not always appreciated, especially shortly in advance to a stop when the vehicle is rolling on sand. To avoid passing hazardous point it is recommended to apply higher amount of sand.

Analogue to the differentiation between quick braking and emergency braking the main protection target is to avoid a possible collision requiring the shorted brake distance possible at extreme low adhesion present, not the brake distance safety. Sand should be delivered in an amount which is effectively increasing available adhesion, irrespective of other requirements for the sanding device. An emergency brake application at extreme low adhesion is the exception. Before continuing the operation additional measures are acceptable, e. g. filling of sand reservoirs, information of the operation manager.

In difference to sanding devices magnetic track brakes are removing the layer between wheel and rail. Brake force transfer is facilitated directly between wheel and rail again. Highest improvement can be achieved when the magnetic track brake is installed within the leading bogie. To be able to gain from the effect of sand the sanding should be applied to the next wheel set following.

The more magnetic track brakes are available within the train the higher the positive effect for available adhesion is. Technical modifications for magnetic track brakes might be possible which are targeting the improvement of adhesion, not impacting the function of the magnetic track brakes negatively. This could be content of further research and development.

The adhesion is a stochastically value. Autumn leaves, ice layers, industrial dirt, oil, rust and agricultural relicts can reduce adhesion significantly. Possible brake distance extensions can be avoided by application of higher brake forces within the other sections. Finally, this would be the emergency brake again.

The parameter in railway operation whose prediction has the highest uncertainty is the adhesion coefficient.

This parameter is limiting the brake power so that the brake distance safety is directly dependent on the adhesion. The technical and the man power effort to compensate the unknown adhesion coefficient is tremendous, but not achieving satisfactory brake distance safety. The advantage of an adhesion coefficient measurement is explained within the following chapters.

Finally the hazards resulting from the time failures act upon is discussed. Some actual vehicle designs provide penalty braking when critical failures occur to achieve via a safe signal path a stop. With the exception of the automatic train protection systems observing the driver reaction and unintended train separation the measure to apply penalty braking should not be used. The driver is responsible for safe operation of the vehicle. In case that he is unable to drive the train anymore quick braking is applied and brings the vehicle safely to a stop. For this case the brake distance is guaranteed by the pre-signaling distance and the automatic train protection system. In cases when the driver is able to provide an appropriate failure reaction on his own it should be within his responsibility to react, supported by technical systems. Examples for penalty braking during driving are the application of brake units without command, brake pipe pressure loss, application of parking brakes at speed. Damage to the vehicle is dependent of the time the failure could act upon. A safe supervision combined with the obligation to react for the driver is sufficient, comparable to a passenger alarm override system.

### 3.3 Adhesion measurement

As already described the adhesion is the unknown but important parameter for railway operation. Common practice is usually to conclude on the adhesion coefficient finally, when a critical brake distance extension occurred. Possible are failures of the brake system, the wheel slide protection system or extreme low adhesion conditions. Carrying out an analysis retrospectively is only when possible, when operational data was logged. A visual inspection of the track where the case occurred does not always deliver relevant information because track conditions might change quickly so that the adhesion conditions are not reproducible. That is why an online adhesion measurement would be advantageous for root cause analysis of brake overshoots and for initiation of preventive measures to avoid future brake distance extension.

Low or extreme low adhesion conditions are limited regarding presence and location. Sections which are generally critical are contained within a low adhesion register. In addition the driver is trained to identify situations quickly which possibly might lead to extreme low adhesion. Possible indication is given e.g. by falling autumn leaves, drizzle rain after a long dry period, dew, hoar-frost. But, at the end the adhesion available is not only depending on such kind of environmental conditions, it is also impacted by the train design. A periodical check of the adhesion coefficient could be the basis for a database containing information regarding adhesion depending on vehicle, track section, season etc. This information could be used to implement dedicated infrastructure measures and to develop vehicle specific season schedules. A lot of correlations are possible for identification and mitigation of risks. The benefit is related to the opportunity to influence the probability of extreme low adhesion. This probability distribution is basis for design and so far is impacting the rules and operational guidelines of railway systems with respect to brake distance safety. From principal it would be possible to increase the allowed utilization of adhesion again to achieve higher deceleration targeting shorter brake distances in hazardous cases

In addition data could be transfer online to the driving service manager to be able to warn following trains. Independent of this aspect a measurement allows higher brake distance safety, because critical service braking cases could be supported by automatically application of the quick braking function. Also the driver continually is informed about the track conditions and achieved support for assessment of the braking capability.

Basis for adhesion measurement is the torque equilibrium of the wheel. A braking torque decelerates the wheel. The retardation of the rotating masses leads to an inertia which counteracts the deceleration. The reduction of wheel set speed again leads to slide between wheel and rails resulting in friction. The weight force on the wheel and the adhesion resulting from friction cause a adhesion force acting onto the wheel tread, creating an adhesions torque there. Finally, the adhesion can be derived from weight force acting on the wheel, wheel radius and braking torque. The measurement of the air suspension pressure gives the baseline to conclude on the weight force, respective the occupation level of the train. The wheel radius needs to be up to date for proper vehicle speed calculation basing of the measured revolutions of the wheel. Also a brake force measurement of the elctrodynamic brake system is available on modern vehicles. To evaluate the brake force of the pneumatic brake pressure sensors are necessary. Another method would be to use the information available from commanding the braking and wheel slide protection system actuators to conclude on the brake force.

Biggest uncertainty in measuring the brake force is resulting from the behavior of the disc-pad friction coefficient: Setting up and implementing a proper friction coefficient model basing on measurements before entering service could significantly enhance the accuracy of online measured brake forces. Another improvement could be achieved by application of direct force measurement, e. g. the measurement of the clamping forces of the actuators.

Precondition for adhesion measurement is to brake a wheel set and/or to use the traction force allowing to conclude on adhesion. The measured adhesion value is always a snap shot and is limited to the demanded adhesion related to the demanded brake force. To be able to observe a wide adhesion range when not altering the deceleration the brake force can only be increased for one wheel set. Individual brake control paths allow applying this procedure during driving. Comparable to a winter brake which is periodically applying the brake actuators slightly to warm up the discs for ensure proper braking effect a cyclic application regime could measure adhesion during driving. In addition this should also be possible to carry out this measurement on voluntary driver's request. To be able to benefit during a brake application from adhesion measurement it is necessary to implement automatic vehicle reactions when an extreme low adhesion coefficient is discovered. Such kind of automatic reactions are the application of maximum brake force possibly in combination with the application of the magnetic track brakes and / or the sanding to deliver high amount of sand. The braking has to be applied throughout speed range. Recording the information during such cases give the basis for further improvement of such kind of measures enhancing the utilization of adhesion.

In a first example, a method for measuring and/or determining an adhesion coefficient between a wheel of a railway vehicle and a rail is described. The railway vehicle drives on the railway. The adhesion coefficient is measured and/or determined while braking at least one wheel set of the railway vehicle during operation of the railway vehicle. According to some embodiments, the adhesion coefficient of one wheel or one wheel set is measured and/or determined while braking (or driving) the wheel or the wheel set of the railway vehicle during operation of the railway vehicle. For instance, the measurement or the determination of the adhesion coefficient is performed for the same wheel or wheel set, which is braked. In some embodiments, the measurement or the determination of the adhesion coefficient of one wheel or one wheel set may be used for concluding to the adhesion coefficient of other wheels or wheel sets.

In a second example, which may be combined with other examples described herein, the adhesion coefficient is determined while braking (or driving) only one wheel set or only two wheel sets of the railway vehicle during operation of the railway vehicle. In one example, one wheel set is braked or driven differently from the other wheel sets, while all wheel sets are braked or driven. This may help avoiding undue wear when using the method according to embodiments described herein.

In a third example, which may be combined with other examples described herein, the adhesion coefficient is determined based on the torque equilibrium of the wheel of the railway vehicle. Details of such a determination are described below in the chapter "5. Implementation."

In a fourth example, which may be combined with other examples described herein, the method includes using at least one of the following as input parameters for determining the adhesion coefficient: the weight force acting on the wheel; the wheel radius; the braking force; the air suspension pressure; and the clamping force of the actuator of the brake. In some examples, the resulting friction radius and/or the driving torque may be used. The input parameters used in the method according to embodiments described herein may be available in a railway vehicle anyway and may, thus, be used without a great effort for obtaining these parameters.

In a fifth example, which may be combined with other examples described herein, the method may further includes determining the adhesion coefficient in a cyclic manner by braking (or driving) at least one wheel set of the railway vehicle in a cyclic manner. In particular, the wheel set is chosen in a cyclic manner from a set or group of at least two wheel sets. Changing the wheel set to be braked helps reducing the wear of the respective wheel set, or distributes the wear approximately equally to the wheel sets.

In a sixth example, which may be combined with other examples described herein, the adhesion coefficient is measured and/or determined automatically (e.g. when a situation occurs, which appears to likely come with a reduced adhesion coefficient, such as rain, or falling leaves) or on demand (e.g. when the driver of the railway vehicle requests a measurement of the adhesion coefficient).

In a seventh example, which may be combined with other examples described herein, the method may further include further at least one of the following features: comparing the measured and/or determined adhesion coefficient to a threshold value, wherein in particular a respond signal is generated based on the comparison of the adhesion coefficient with the threshold value; evaluating the measured and/or determined adhesion coefficient based on the threshold value, and adding additional brake force to the railway vehicle, if the measured and/or determined adhesion coefficient is below a threshold value, especially by increasing the braking force of the brake applied when measuring and/or determining the adhesion coefficient; and using an additional brake, e.g. a magnetic track brake; and sanding.

In some embodiments, the measured and/or determined adhesion coefficient is compared to a threshold value. According to some embodiments, threshold values may be provided for low adhesion coefficients (such as adhesion coefficients between about 0,03-0,8) and for extreme low adhesion coefficients (such as adhesion coefficients of less than 0,03).

In an eighth example, which may be combined with other examples described herein, the method may include at least one of the following features: transferring the result of the measured and/or determined adhesion coefficient to the driver of the railway vehicle; and giving the driver of the railway vehicle a signal for unusual high and/or unusual low adhesion coefficients compared to a (or at least one) threshold value, wherein an unusual high and/or unusual low adhesion coefficients would in particular require an adaption of the railway vehicle speed or other operational parameters of the vehicle (e.g. the time of brake initiation). By these features, the driver is informed about the actual adhesion coefficient. The driver is thus able to adapt the driving behavior to the actual conditions. This increases the safety of the vehicle operation.

In a ninth example, which may be combined with other examples described herein, the method further includes (at least one of the following features): transferring and/or recording the data obtained by the measuring and/or determining of the adhesion coefficient to a control unit; using the adhesion coefficient for setting an operational configuration of the railway vehicle, in particular for predicting a braking behavior of the railway vehicle; transferring and/or recording the data obtained by the measuring and/or determining of the adhesion coefficient to a remote control unit (e.g. a control unit located outside the railway vehicle), especially to the traffic controller or dispatcher; and storing the measured and/or determined adhesion coefficient on a railway map for subsequent railway vehicles. The method according at least one feature of the ninth example allows using the obtained adhesion coefficient in a suitable way for increasing the safety of vehicle operation, in particular for the vehicle measuring the data as well as for vehicles using the rails subsequently.

In a tenth example, which may be combined with other examples described herein, braking the railway vehicle for measuring and/or determining of the adhesion coefficient takes place for a time interval shorter than 5 sec, typically shorter than 3 sec, more typically shorter than 2 sec, more typically shorter than 1 sec, and even more typically shorter than 0.5 sec. The time period used for the measurement brake is held short so that the braking does not unnecessarily interfere with the operation of the vehicle. Further, the comfort for eventual passengers of the vehicle is increased when using short time periods for the measurement braking.

In an eleventh example, which may be combined with other examples described herein, the method according to embodiments described herein includes at least one of the following features: braking the railway vehicle for measuring and/or determining of the adhesion coefficient is performed using less than 10% of the brakes present in the railway vehicle, in particular using two brake sets of the railway vehicle, in particular using two brakes of the railway vehicle; and/or braking the railway vehicle for measuring and/or determining of the adhesion coefficient is performed so that the railway vehicle does not experience a substantial braking, e.g. not experiencing a substantial loss of speed, in particular not experiencing a loss of speed higher than 5% of the actual speed, typically 3% of the actual speed, and even more typically 2% of the actual speed, in particular not experiencing a braking performance of more than 6 brake percentage, more typically 5 brake percentage, more typically 3 brake percentage, and even more typically 2 brake percentage, wherein the actual speed is the speed before the measurement and/or determination of the adhesion coefficient. Considering these parameters, the measurement of the adhesion coefficient will not unnecessarily interfere with the operation of the vehicle. Further, as described above with respect to the time period for braking, the comfort for eventual passengers of the vehicle is increased when using short time periods for the measurement braking.

In a twelfth example, a railway vehicle including a wheel set related or bogie related brake force generating system is provided including at least one of the following features: a first determining unit for determining the weight force acting on a wheel of the railway vehicle; a storage means for storing the radius of the wheel, or optionally a second determining unit for determining the radius of the wheel; a third determining unit for determining the braking torque; and a fourth determining unit being in communication with the first determining unit, the storage means or, optionally the second determining unit, and the third determining unit for determining the adhesion coefficient of the wheel to the rail based on the weight force on the wheel determined by the first determining unit, the radius of the wheel and the braking torque determined by the third determining unit. Typically, the brake force generating system of the railway vehicle is preferably configured for carrying out the method according to embodiments described herein, such as the method described in examples above.

In a thirteenth example, which may be combined with other examples described herein, the railway vehicle may further include at least one of a communication line from the fourth determining unit to the driver's cab of the railway vehicle; a display device for displaying the measured and/or determined adhesion coefficient; and a communication line from the fourth determining unit to the traffic controller or dispatcher. The features simplify the handling of the measurement and lead to an operation of the vehicle being more secure and more accepted (and, thus, used) by the driver of the railway vehicle.

In a fourteenth example, which may be combined with other examples described herein, the railway vehicle further includes a storage medium for storing the adhesion coefficient determined by the fourth determining unit. Storing the determined adhesion coefficient helps accessing and controlling the gathered data and helps using the experience of previous drives for following drives.

In a fifteenth example, which may be combined with other examples described herein, the first determining unit is configured for determining the weight force acting on the wheel by measuring the air suspension pressure of the wheel.

## 4. Summary

Modern railway vehicle are designed to for operation with low amount of disturbances. Most important aspect is to stay within maximum brake distances pre-defined by the signaling system. Requirements for the brake system design result from required brake percentage (brake power) during a quick braking application and from maximum adhesion utilization allowed. Automatic train protection systems are in alignment with this design approach. Brake systems designed according to this approach allow a fail safe and reliable operation.

When interferences are impacting the operation the final instance for safety is the driver. How to react in case of these interferences is described within an extensive set of operational rules and guidelines. Effectively the driver has a very limited scope of reactions available: the application of a quick braking, e. g. commanding the sanding devices and the magnetic track brakes, in case that voluntary application is foreseen. Main driver for the brake distance safety is his experience, the early application of service braking to avoid brake distance extensions. In case of a collision hazard or in case of brake component failing during braking actually the driver has no possibility to further enhance the brake force. Also in case of automatically initiated penalty braking he has no possibility to intervene to avoid critical stops within critical track sections.

To achieve a compromise between a brake system design driven by pre-defined brake distance and the design to achieve the shorted brake distance ever possible, the emergency brake could be defined as a separate brake mode. The emergency brake should achieve a higher deceleration compared to quick braking mode, but the requirements regarding reliability could be lower. Being to separately command the emergency brake the driver would have the opportunity to provide dedicated reaction for specific interferences. Different deceleration is proposed because the adhesion available is unknown and extreme low adhesion might occur. In case that the adhesion utilization could be enhanced more brake power could be implemented for the quick braking mode higher brake.

The available adhesion can be enhanced by commanding technical devices which are impacting the wheel-rail contact. Such technical systems are e. g. sanding devices and magnetic track brakes. Up to now both systems are not optimized to achieve a maximum adhesion enhancement at extreme low adhesion. This concerns the absolute number and the arrangement of these devices as well as their design parameters and the interaction within the vehicle. Technical improvement for existing devices and development of specific components for enhancement of adhesion are content of research and development.

Precondition for substantial improvement is an adhesion measurement on the vehicle. Main technical preconditions are given within the majority of the vehicles. An adhesion measurement can also be used to provide specific methods to lower brake distance extensions like infrastructure measures, adhesion register and season dependent schedule. When extending the measurement to a cyclic measurement during driving or to a measurement on driver's request an early reaction on hazards caused by extreme low adhesion could be provided, e. g. by driver's reactions supported by an automatic system reaction. This support could be the automatic application of quick braking combined with automatic application of adhesion enhancing devices like magnetic track brakes and sanding with high sand delivery rates. In addition the data collected from adhesion measurement provides valuable information for future brake system conception targeting brake distance safety.

## 5. Implementation

### 5.1. Description of the system

The invention relates to a measurement system with which the adhesion coefficient of a rail vehicle can be determined during the driving operation. For the purpose thereof, vehicle data are determined, which are already measured in modern braking systems. The precision of the braking system is determined by the braking concept and the braking equipment.

A tangential force $F_{x,t}$ and $F_{x,b}$ is always necessary for determining the traction. This makes the determination of the adhesion coefficient possible only during accelerating and braking situations. The calculation of the value is described in chapter 5.2. The sequence of a train ride can be divided into four sections of motion: acceleration, steady condition, coasting and braking.

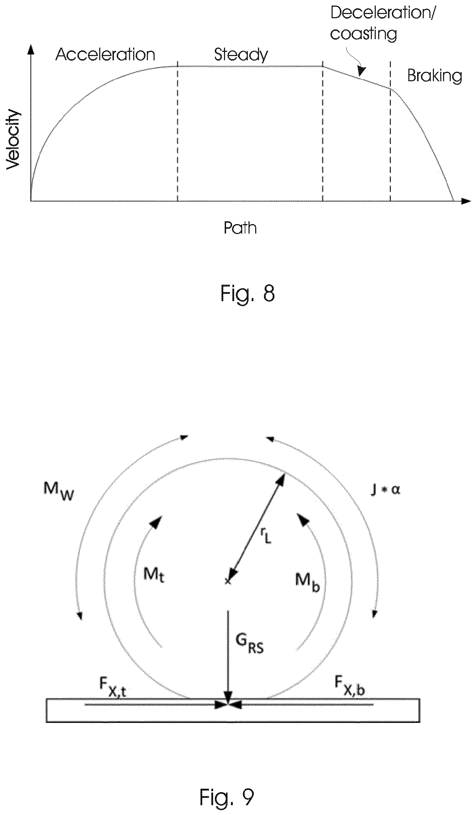

Fig. 8 shows the speed (Geschwindigkeit), the acceleration (Beschleunigung), the steady (Beharrung), the deceleration/coasting (Auslauf), the braking (Bremsung) and the distance (Weg) as a movement pattern of a train ride.

During the acceleration phase, the driving power is transferred to the rail as a tangential force $F_{x,t}$ via the driving wheel sets. The tangential force is limited by the adhesion coefficient and by the implemented traction power. Calculating the traction is possible by measuring the drive torque and the acceleration of the driving wheel set.

During the steady condition of the vehicle at a constant speed, the drive exerts only so much power that is required to maintain the speed. Since the required drive- and brake forces are minimal, measuring the traction is not viable. The traction can only be determined when the individual wheel sets are accelerated and decelerated more strongly without significantly influencing the overall driving- or braking power.

Coasting is also described as coasting phase. Therein, the train reduces its speed only due to the driving resistance. These are essentially traction independent braking forces, which do not permit the determination of the traction. Similarly as driving in the steady condition, the traction can only be determined by the increase of the driving- or braking power at individual wheel sets.

During the braking process, a tangential force $F_{x,b}$ is generated via the braked wheel sets, which delay the vehicle. If the available traction is exceeded, the delay of the wheel set is increased with respect to the delay of the vehicle. The traction may then be determined from the torque of inertia and the braking torque.

The measured traction may be displayed to the vehicle's driver or evaluated in order to provide only relevant information to the vehicle's driver in critical situations. One example is displaying information in traffic-light colours with an evaluation in sufficiently, low and extremely low traction.

According to the respective display, the vehicle's driver may adapt the braking. The registered values are stored and transmitted to succeeding trains or the control station. Optionally, an intervention of the system into the braking system may be realized.

### 5.2. Measuring method

Measuring the adhesion coefficient is possible via the balance of moments at a wheel set of the vehicle (equation 1). Thereby, the driving- as well as the braking situation may be considered.

$$f_x = \frac{M_t - J*\alpha - M_W}{\Delta G_{RS}*r_L} = \frac{M_b - J*\alpha - M_W}{\Delta G_{RS}*r_L} \qquad \text{Equation 1}$$

| | | | |
|---|---|---|---|
| $f_x$ | adhesion coefficient | $M_b$ | braking torque in Nm |
| $M_W$ | resisting torque in Nm | $M_t$ | driving torque in Nm |
| $J*\alpha$ | torque of inertia of the wheel set in Nm | $r_L$ | rolling wheel radius in m |
| $\Delta G_{RS}$ | weight force at the wheel contact point in N | | |

Fig. 9 shows the force- and torque relationship at the wheel set.

The system uses these in real-time for determining the adhesion coefficient.

The braking torque $M_b$ is determined via the traction dependent braking systems of the vehicle. These generally include the electropneumatic and the electrodynamic brake. In the case of the electropneumatic brake, the C-pressure is measured in the head of the cylinder of the braking system and thereby the piston force is measured. The braking force of the electrodynamic brake may be determined via the induced power of the generator operation of the employed electrical machine.

The driving torque $M_t$, irrespective of the type of electrical machine may be determined by the equation $M = P * \omega$. The equation may need to be adapted taking into account the characteristics of the employed machine.

The torque of inertia J of the rotating mass is generally known, the acceleration of the wheel set $\alpha$ may be determined via the speed sensors integrated in the wheel set by derivation of the angular velocity. The sense of direction is dependent from the respective case; the torque however always opposes the driving- and braking torque respectively.

Sensors, which are used in air bellows in a secondary air suspension of train sets or are connected via a pipe to the air bellow of a secondary suspension, measure the load pressure (sensing pressure), which depends on the vehicle payload. From the pressure, the wheel vertical force $\Delta G_{RS}$ may be determined. The rotational masses are design masses and therefore known.

The resistant torque $M_W$ is the sum of all forces of resistance across the rolling wheel radius $r_L$, which act on the vehicle. These are generally known from previous driving tests or can be derived from existing measurement data during the trip. Also in this case, the torque always opposes the driving- and braking torque respectively. The acting forces of resistance include:

- The resistance force of the train $F_{WW}$ as sum of all forces, which due to physical processes such as friction or abrasion impact on the vehicle,

- The inclination force $F_N$ due to the force acting on a inclined plane,

- The curve resistance force $F_{Bo}$, which results due to a plurality of effects when driving over a track curve.

- The mass acceleration force $F_M$, which acts as inertia of the vehicle against the effective braking- and driving forces respectively.

- The tensile force $F_Z$ and the compressive force $F_D$, which act through vehicles that are coupled in front or behind.

The effective forces of the resistant torque $M_W$ can either be determined from driving tests ($F_{WW}$) or indirectly from the available measurement data ($F_Z$, $F_D$). Via optional sensor systems of the driving movement, in the form of an absolute position transducer, the rail curve resistance force $F_{Bo}$ and the inclination force $F_N$ may be determined, in order to further increase the precision of the adhesion coefficient.

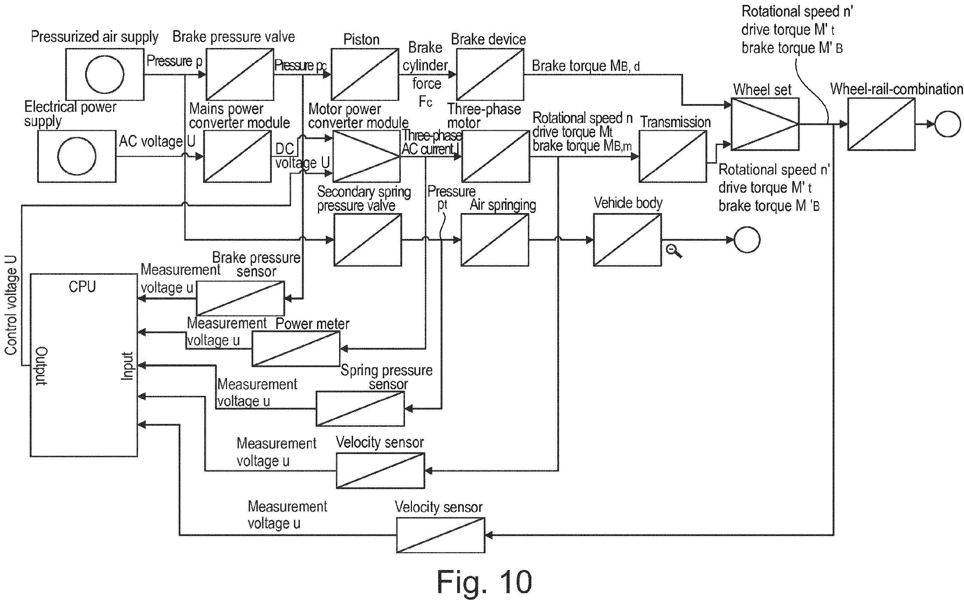

Figure 10 shows an exemplary system outline for determining the adhesion coefficient in a rail vehicle of a wheel set.

The system shown in Fig. 10 may be understood as a system being present in a railway vehicle including a wheel set related or bogie related brake force generating system according to embodiments described herein. In some embodiments, the system shown in Fig. 10 may allow performing a method according to embodiments described herein. Fig. 10 shows a first determining unit for determining the weight force acting on a wheel of the railway vehicle. For instance, the first determining unit may be provided by the CPU and the communication lines providing information to the CPU. In the embodiment shown in Fig 10, the first determining unit may be configured for determining the weight force acting on the wheel by measuring the air suspension pressure, which may e.g. be the pressure $p_t$ of the air springing device measured by the spring pressure sensor. According to embodiments described herein, the vehicle may further include a storage means for storing the radius of the wheel, or optionally a second determining unit for determining the radius of the wheel. The storage means or the second determining unit may be provided by the CPU in Fig. 10, too. For instance, the radius of the wheel may be measured and the measurement information may be provided to the CPU. The CPU may, in some embodiments, be able to determine the wheel radius from other information obtained, e.g. by measurements or by access to stored vehicle data. The vehicle according to embodiments described herein may further include a third determining unit for determining the braking torque, which is e.g. shown in Fig. 10 by the brake torque $M_{B,b}$ and the respective communication lines. According to embodiments described herein, a fourth determining unit is provided being in communication with the first determining unit, the storage means or, optionally the second determining unit, and the third determining unit for determining the adhesion coefficient of the wheel to the rail based on the weight force on the wheel determined by the first determining unit, the radius of the wheel and the braking torque determined by the third determining unit. In some embodiments, the fourth determining unit may be part of or be included in the CPU, too. For instance, the CPU may allow different units to communicate and exchange information. Typically, the units may calculate or determine parameters like the adhesion coefficient based on the information obtained by other units or by the sensor system, as exemplarily shown in Fig. 10. According to some embodiments, the brake force generating system is configured for carrying out the method according to embodiments described herein.

In some embodiments, the vehicle may further include a storage medium for storing the adhesion coefficient determined by the fourth determining unit, such as a storage medium provided in the CPU as exemplarily shown in Fig. 10.

The skilled person may understand that Fig. 10 only shows one example of a system provided in a railway vehicle according to embodiments described herein. The railway vehicle according to embodiments may have alternative or additional systems or structures for providing the first determining unit, the storage means (or the second determining unit), the third determining unit and the fourth determining unit.

For measuring or determining the adhesion coefficient $f_x$, several principles may be applied. In the following, a list of principles is provided, which may be used in different driving situations. The use of the principles in different driving situations is explained in detail below with respect to Table 3.

Table 1: parameters to be determined or measured for the adhesion coefficient

| Principle | | Calculation |
|---|---|---|
| 1.1 | | Calculation from moment equilibrum at the wheel set |
| | 1.1.1a | Braking moment: $M_{Br} + M_W = J \cdot \dot{\omega}_{Rad} + M_{fx}$ $$f_x = \frac{F_{Br} \cdot r_{Bremse} + M_W - J \cdot \dot{\omega}_{Rad}}{m \cdot g \cdot r_{Rad}}$$ Adhesion coefficient: Input parameters: $r_{Bremse}$=average friction radius of brake; J = mass moment of inertia wheel/wheelset corrected by calibration of wheel diameter $r_{Rad}$= wheel diameter corrected by calibration of wheel diameter g= gravity acceleration |

(continued)

| Principle | | Calculation |
|---|---|---|
| | | m= vertical wheel force determined from the measurement of the load of the secondary spring and over chassis masses corrected by a calibration of the wheel diameter<br>$M_w$= resisting torque determined during the type test<br>$F_{RF}$= return spring force<br>ÜG= leverage transmission<br>$\eta$ = degree of efficiency<br><u>Measurement parameters:</u> |
| | | $$F_{Br} = (10 \cdot p_C[bar] \cdot A_K[cm^2] - F_{RF}) \cdot \ddot{U}G \cdot \eta \cdot \mu_B$$<br>$F_{Br}$= braking force<br>$p_c$= pressure of brake cylinder<br>$\omega_{Rad}$= wheel/wheel set velocity<br>$d\omega_{Rad}/dt$= wheel/wheel set acceleration<br><u>parameter:</u><br>$\mu_B$= surface friction coefficient |
| | 1.1.1b | Braking force: negligence of the resisting torque- and the mass moment of inertia by force measurement at the moment of slip; Adhesion coefficient:<br>$$f_x = \frac{F_{Br} \cdot r_{Bremse}}{m \cdot g \cdot r_{Rad}}$$ |
| | 1.1.2.a | Traction torque: see 1.1.1.a |
| | 1.1.2.b | Traction force: see 1.1.1.b<br>$$f_x = \frac{F_{Tr}}{m \cdot g}$$<br>Adhesion coefficient:<br>Measurement parameters:<br>$F_{Tr}$= traction force (provided by driving system) |
| 1.2 | | Calculation from vehicle acceleration at all-axle-skidding/ slide |
| | 1.2.1 | Brake delay all-axle- skidding:<br>$$f_x = \frac{r_{Rad} \cdot d\omega/dt}{g}$$<br>Adhesion coefficient:<br><u>Input parameters:</u><br>g= gravity acceleration<br>$r_{Rad}$= wheel diameter corrected by automatic calibration of wheel diameter<br><u>Measurement parameters:</u><br>$\omega$= wheel/wheel set velocity<br>$d\omega/dt$= wheel/wheel set acceleration |
| | 1.2.2 | Vehicle acceleration at all-axle-skidding: see 1.2.1 |

In the following, a table is provided showing the method in different situations:

Table 2: measurement and usage of the adhesion coefficient

| Method | | |
|---|---|---|
| 2.1 | | Automatic measurement at braking in the case of sliding |
| | 2.1.1 | During quick braking:<br>Proceeding: |

(continued)

| Method | | | |
|---|---|---|---|
| | | | Measurement principle 1.1 at all sliding wheel sets or 1.2 at all-axle skidding<br>Evaluation of the adhesion and the regeneration of the adhesion dependent on the vehicle equipment and the control of adhesion increasing components<br>Storage and transfer of data dependent on the measurement result |
| | 2.1.2 | | During service braking:<br>Proceeding:<br>Measurement principle 1.1 at all sliding wheel sets or 1.2 at all-axle-skidding<br>Evaluation of the adhesion and the regeneration of the adhesion dependent on the vehicle equipment and (optionally automatic) control of adhesion increasing components<br>Display of the adhesion, e.g. via a traffic light system<br>Display of drivers' hints for activating self-braking or components for the improved adhesion<br>Storage and transfer of data to infrastructure management dependent on the measurement result |
| 2.2 | | | Measurement on request of the driver at braking with service brake without sliding |
| | 2.2.1 | | Measurement with little influence on the vehicle state<br>Proceeding:<br>Increasing the braking force at the measurement wheel set until sliding or an adjustable maximum of the adhesion coefficient<br>Adhesion measurement see 1.1<br>Un-braking to the service braking force requirement<br>Display of the adhesion, e.g. via a traffic light system<br>Display of drivers' hints for activating self-braking or components for the improved adhesion<br>Storage and transfer of data to infrastructure management dependent on the measurement result |
| | 2.2.2 | | Measurement without influence on the vehicle state<br>Proceeding:<br>Redistribution of the sum of the braking force to the measurement wheel set until sliding or an adjustable maximum of the adhesion coefficient<br>Adhesion measurement: see 1.1<br>braking to the service braking force requirement or lowering the braking effort down to service braking force level<br>Display of the adhesion, e.g. via a traffic light system<br>Display of drivers' hints for activating self-braking or components for the improved adhesion<br>Storage and transfer of data to infrastructure management dependent on the measurement result |
| 2.3 | | | Measurement on request of the driver when rolling without sliding<br>Proceeding:<br>Adjusting the braking force at the measurement wheel set until sliding or an adjustable maximum of the adhesion coefficient<br>Further proceeding see 2.2.1 or 2.2.2<br>Optimized wear: method according to 2.2 in consideration of changing wheel sets |
| 2.4 | | | Automatic measurement by a cyclic request via an activatable autumn operation<br>Proceeding:<br>Adjusting the braking force at the measurement wheel set until sliding or an adjustable maximum of the adhesion coefficient<br>Further proceeding see 2.2.1 or 2.2.2<br>Optimized wear: method according to 2.2 in consideration of changing wheel sets |
| 2.5 | | | Automatic measurement in case of traction with skidding |

(continued)

| Method | | |
|---|---|---|
| | | Proceeding: <br> Measurement principle 1.1 at all skidding wheel sets <br> Evaluation of the adhesion and the regeneration of the adhesion dependent on the vehicle equipment and (optionally automatic) control of adhesion increasing components <br> Display of the adhesion, e.g. via a traffic light system <br> Display of drivers' hints for adjusting the driver's hints and/or for controlling components for the improved adhesion <br> Storage and transfer of data to infrastructure management dependent on the measurement result |
| 2.6 | | Measurement on request of the driver at driving without skidding |
| | 2.6.1 | Measurement on request of the driver at driving without skidding <br> Measurement with little influence on the vehicle state <br> Proceeding: <br> Increasing the braking force at the measurement wheel set/ measurement wheel set group until sliding or an adjustable maximum of the adhesion coefficient <br> Measurement of adhesion coefficient see 1.1 <br> Reduction of the traction force to the operational traction force requirement <br> Display of the adhesion, e.g. via a traffic light system <br> Display of drivers' hints for adjusting the driver's hints and/or for controlling components for the improved adhesion <br> Storage and transfer of data to infrastructure management dependent on the measurement result |
| | 2.6.2 | Measurement without influence on the vehicle state <br> Proceeding: <br> Redistribution of the sum of the braking force to the measurement wheel set/measurement wheel set group until sliding or an adjustable maximum of the adhesion coefficient <br> Measurement of adhesion coefficient see 1.1 <br> Reduction of the traction force to the operational tractional force requirement <br> Display of the adhesion, e.g. via a traffic light system <br> Display of drivers' hints for adjusting the driver's hints and/or for controlling components for the improved adhesion <br> Storage and transfer of data to infrastructure management dependent on the measurement result |
| 2.7 | | Adhesion based method for adjusting the sanding rate to the measured adhesion (sanding efficiency and sanding consumption optimization) <br> Proceeding: <br> Adhesion measuremnt: see 1. <br> Method 1: safety optimized at quick brakings <br> Adjusting the maximum sand amount when extreme low adhesion ($f_x<0,03$) was measured <br> Adjusting the reduced sand amount at when low adhesion was measured <br> Method 2: amount optimized at service brake at request <br> Comparison of the requested deceleration with achievable deceleration according to measurement of adhesion coefficient <br> Providing the adjusted sand amount |

If a reduced adhesion coefficient is measured, the following table may be used in order to determine, which method or measurement principle shown in the table above may be used:

Table 3: driving with reduced adhesion coefficient in different driving situations

| Operational state | Vehicle state | method | Measurement principle | Improvement of adhesion |
|---|---|---|---|---|
| Starting up | traction | 2.5 | 1.1.2 or 1.2.2 | Automatic sanding |
| Acceleration | traction | 2.5 | 1.1.2 or 1.2.2 | Automatic sanding |
| Steady | traction | 2.5 2.6 | 1.1.2 | Not relevant |
| Rolling | Rolling | 2.3 2.4 | 1.1.1 | Not relevant |
| Service brake | Braking | 2.1 2.2 | 1.1.2 or 1.2.2 | - manual control of magnetic brake due to hints for the driver<br>- manual control of sanding due to hints for the driver, optimized according to 2.7 |
| Quick brake | Braking | 2.1.1 | 1.1.2 or 1.2.2 | - Automatically by control of the magnetic brake<br>- automatically by control of sanding optimized according to 2.7 |

**References**

[1] Saumweber E.: Grundlagen der Schienenfahrzeugbremse, AET 43, Hestra Verlag, Darmstadt, 1989.

[2] Kölling M.: Bremsen im Betrieb bedienen und prüfen, Richtlinie 91501, DB, 11.12.2011.

[3] Minde F.: Grundlagen der Eisenbahnbremstechnik, 2. Vorlesung "Schienenfahrzeugtechnik" IVE Hannover, 2007.

**Claims**

1. Method for measuring and/or determining an adhesion coefficient between a wheel of a railway vehicle and a rail, on which the railway vehicle drives or moves, wherein the adhesion coefficient is measured and/or determined while braking or driving at least one wheel set of the railway vehicle during operation of the railway vehicle,

    wherein the adhesion coefficient is determined based on the torque equilibrium of the wheel of the railway vehicle, wherein the adhesion coefficient is determined in a cyclic manner by braking or driving at least one wheel set of the railway vehicle in a cyclic manner, wherein said wheel set is chosen in a cyclic manner from a set of at least two wheel sets;
    wherein the method further comprises using at least one of the following as input parameters for determining the adhesion coefficient: the weight force acting on the wheel; the wheel radius; and the braking force.

2. Method according to claim 1, wherein the adhesion coefficient is determined while braking or driving only one wheel set or only two wheel sets of the railway vehicle during operation of the railway vehicle, or while braking or driving one wheelset differently while braking all wheel sets.

3. Method according to any of the preceding claims, comprising further using at least one of the following as input parameters for determining the adhesion coefficient:
    the air suspension pressure; the clamping force of the actuator of the brake, the resulting friction radius, and the driving torque.

4. Method according to any of the preceding claims, further comprising at least one of
    comparing the measured and/or determined adhesion coefficient to a threshold value, wherein in particular a respond signal is generated based on the comparison of the adhesion coefficient with the threshold value;
evaluating the measured and/or determined adhesion coefficient based on the threshold value, and
adding additional brake force to the railway vehicle or activating adhesion improving systems, if the measured and/or determined adhesion coefficient is below a threshold value, especially by

increasing the braking force of the brake applied when measuring and/or determining the adhesion coefficient;
using an additional brake or an adhesion improving system, e.g. a magnetic track brake; and
sanding.

5. Method according to any of the preceding claims, further comprising at least one of:

transferring the result of the measured and/or determined adhesion coefficient to the driver of the railway vehicle; and
giving the driver of the railway vehicle a signal for unusual high and/or unusual low adhesion coefficients compared to at least one threshold value, wherein an unusual high and/or unusual low adhesion coefficients would in particular require an adaption of the railway vehicle speed, time or brake initiation or other operational parameters of the vehicle.

6. Method according to any of the preceding claims, further comprising
Transferring and/or recording the data obtained by the measuring and/or determining of the adhesion coefficient to a control unit;
Using the adhesion coefficient for setting an operational configuration of the railway vehicle, in particular for predicting a braking behavior of the railway vehicle;
Transferring and/or recording the data obtained by the measuring and/or determining of the adhesion coefficient to a remote control unit (e.g. a control unit located outside the railway vehicle), especially to the traffic controller or dispatcher;
Storing the measured and/or determined adhesion coefficient on a railway map for subsequent railway vehicles.

7. Method according to any of the preceding claims, wherein braking the railway vehicle for measuring and/or determining of the adhesion coefficient takes place for a time interval shorter than 5 sec, typically shorter than 3 sec, more typically shorter than 2 sec, more typically shorter than 1 sec, and even more typically shorter than 0.5 sec.

8. Method according to any of the preceding claims, wherein braking the railway vehicle for measuring and/or determining of the adhesion coefficient is performed using less than 10% of the brakes present in the railway vehicle, in particular using two brake sets of the railway vehicle, in particular using two brakes of the railway vehicle; and/or wherein braking the railway vehicle for measuring and/or determining of the adhesion coefficient is performed so that the railway vehicle does not experience a substantial braking, e.g. not experiencing a substantial loss of speed, in particular not experiencing a loss of speed higher than 5% of the actual speed, typically 3% of the actual speed, and even more typically 2% of the actual speed, in particular not experiencing a braking performance of more than 6 brake percentage, more typically 5 brake percentage, more typically 3 brake percentage, and even more typically 2 brake percentage, wherein the actual speed is the speed before the measurement and/or determination of the adhesion coefficient.

9. Railway vehicle including a wheel set related or bogie related brake force generating system, comprising:

a first determining unit for determining the weight force acting on a wheel of the railway vehicle;
a storage means for storing the radius of the wheel, or optionally a second determining unit for determining the radius of the wheel;
a third determining unit for determining the braking torque; and
a fourth determining unit being in communication with the first determining unit, the storage means or, optionally the second determining unit, and the third determining unit for determining the adhesion coefficient of the wheel to the rail based on the torque equilibrium of the wheel of the railway vehicle, the weight force on the wheel determined by the first determining unit, the radius of the wheel and the braking torque determined by the third determining unit,
wherein the brake force generating system is configured for carrying out the method according to any one of the preceding claims.

10. Railway vehicle according to claim 9, further comprising at least one of:

a communication line from the fourth determining unit to the driver's cab of the railway vehicle;
a display device for displaying the measured and/or determined adhesion coefficient; and
a communication line from the fourth determining unit to the traffic controller or dispatcher.

11. Railway vehicle according to any of claim 9 to 10, further comprising a storage medium for storing the adhesion coefficient determined by the fourth determining unit.

12. Railway vehicle according to any of claims 9 to 11, wherein the first determining unit is configured for determining the weight force acting on the wheel by measuring the air suspension pressure of the wheel.

**Patentansprüche**

1. Verfahren zur Messung und/oder Bestimmung eines Reibungskoeffizienten zwischen einem Rad eines Schienenfahrzeugs und einer Schiene, auf der das Schienenfahrzeug fährt oder sich bewegt, wobei der Reibungskoeffizient gemessen und/oder bestimmt wird, während mindestens ein Radsatz des Schienenfahrzeugs während des Betriebs des Schienenfahrzeugs gebremst oder angetrieben wird,
wobei der Reibungskoeffizient auf Basis des Drehmomentgleichgewichts des Rades des Schienenfahrzeugs bestimmt wird,
wobei der Reibungskoeffizient zyklisch bestimmt wird, indem mindestens ein Radsatz des Schienenfahrzeugs zyklisch gebremst oder angetrieben wird, wobei der Radsatz zyklisch aus einem Satz von mindestens zwei Radsätzen ausgewählt wird;
wobei das Verfahren ferner die Verwendung mindestens eines der folgenden als Eingangsparameter zur Bestimmung des Reibungskoeffizienten aufweist: die auf das Rad wirkende Gewichtskraft; den Radradius; und die Bremskraft.

2. Verfahren nach Anspruch 1, wobei der Reibungskoeffizient bestimmt wird, während nur ein Radsatz oder nur zwei Radsätze des Schienenfahrzeugs während des Betriebs des Schienenfahrzeugs gebremst oder angetrieben wird/werden, oder während ein Radsatz anders gebremst oder angetrieben wird, während alle Radsätze gebremst werden.

3. Verfahren nach einem der vorstehenden Ansprüche, weiterhin aufweisend die Verwendung mindestens eines der folgenden als Eingangsparameter zur Bestimmung des Reibungskoeffizienten:
der Luftfederdruck; die Klemmkraft des Aktuators der Bremse, der resultierende Reibungsradius und das Antriebsmoment.

4. Verfahren nach einem der vorhergehenden Ansprüche, ferner aufweisend mindestens eines aus
Vergleichen des gemessenen und/oder ermittelten Reibungskoeffizienten mit einem Schwellenwert, wobei insbesondere ein Antwortsignal auf der Grundlage des Vergleichs des Reibungskoeffizienten mit dem Schwellenwert erzeugt wird;
Auswerten des gemessenen und/oder bestimmten Reibungskoeffizienten auf der Basis des Schwellenwertes, und Hinzufügen zusätzlicher Bremskraft zum Eisenbahnfahrzeug oder Aktivieren von Reibungsverbesserungssystemen, wenn der gemessene und/oder bestimmte Reibungskoeffizient unter einem Schwellenwert liegt, insbesondere durch

Erhöhung der Bremskraft der Bremse, die bei der Messung und/oder Bestimmung des Reibungskoeffizienten eingesetzt wird;
Verwendung einer zusätzlichen Bremse oder eines Reibungsverbesserungssystems, z.B. einer Magnetspurbremse; und
Absanden.

5. Verfahren nach einem der vorstehenden Ansprüche, das ferner mindestens eines der folgenden aufweist:

Übertragung des Ergebnisses des gemessenen und/oder ermittelten Reibungskoeffizienten an den Fahrer des Eisenbahnfahrzeugs; und
Ausgeben, an den Fahrer des Eisenbahnfahrzeugs, eines Signals für ungewöhnlich hohe und/oder ungewöhnlich niedrige Reibungskoeffizienten im Vergleich zu mindestens einem Schwellenwert, wobei ein ungewöhnlich hoher und/oder ungewöhnlich niedriger Reibungskoeffizient insbesondere eine Anpassung der Geschwindigkeit, der Zeit oder der Bremsauslösung des Eisenbahnfahrzeugs oder anderer Betriebsparameter des Fahrzeugs erfordern würde.

6. Verfahren nach einem der vorstehenden Ansprüche, ferner aufweisend
Übertragen und/oder Aufzeichnen der durch die Messung und/oder Bestimmung des Reibungskoeffizienten erhaltenen Daten an eine Steuereinheit;
Verwenden des Reibungskoeffizienten zur Einstellung einer Betriebskonfiguration des Schienenfahrzeugs, insbesondere zur Vorhersage eines Bremsverhaltens des Schienenfahrzeugs;
Übertragen und/oder Aufzeichnen der durch die Messung und/oder Bestimmung des Reibungskoeffizienten gewonnenen Daten an eine Fernsteuereinheit (z.B. eine außerhalb des Schienenfahrzeugs befindliche Steuereinheit), insbesondere an den Verkehrsleiter oder Dispatcher;
Abspeichern des gemessenen und/oder ermittelten Reibungskoeffizienten auf einer Eisenbahnkarte für nachfolgende Eisenbahnfahrzeuge.

7. Verfahren nach einem der vorstehenden Ansprüche, wobei das Abbremsen des Eisenbahnfahrzeugs zur Messung und/oder Bestimmung des Reibungskoeffizienten für ein Zeitintervall von weniger als 5 s, typischerweise weniger als 3 s, typischerweise weniger als 2 s, noch typischerweise weniger als 1 s und noch typischer weniger als 0,5 s erfolgt.

8. Verfahren nach einem der vorstehenden Ansprüche, wobei das Abbremsen des Schienenfahrzeugs zur Messung und/oder Bestimmung des Reibungskoeffizienten unter Verwendung von weniger als 10% der im Schienenfahrzeug vorhandenen Bremsen, insbesondere unter Verwendung von zwei Bremssätzen des Schienenfahrzeugs, durchgeführt wird; und/oder
wobei das Abbremsen des Schienenfahrzeugs zur Messung und/oder Bestimmung des Reibungskoeffizienten so durchgeführt wird, dass das Schienenfahrzeug keine wesentliche Bremsung erfährt, z.B. keinen wesentlichen Geschwindigkeitsverlust erfährt, insbesondere keinen Geschwindigkeitsverlust von mehr als 5% der tatsächlichen Geschwindigkeit, typischerweise 3% der tatsächlichen Geschwindigkeit und noch typischer 2% der tatsächlichen Geschwindigkeit erfährt, insbesondere keine Bremsleistung von mehr als 6 Bremsprozent, typischerweise 5 Bremsprozent, typischerweise 3 Bremsprozent und noch typischer 2 Bremsprozent erfährt, wobei die tatsächliche Geschwindigkeit die Geschwindigkeit vor der Messung und/oder Bestimmung des Reibungskoeffizienten ist.

9. Schienenfahrzeug mit einem radsatzbezogenen oder drehgestellbezogenen Bremskrafterzeugungssystem, aufweisend
eine erste Bestimmungseinheit zur Bestimmung der auf ein Rad des Schienenfahrzeugs wirkenden Gewichtskraft;
Speichermittel zum Speichern des Radius des Rades, oder wahlweise eine zweite Bestimmungseinheit zur Bestimmung des Radius des Rades;
eine dritte Bestimmungseinheit zur Bestimmung des Bremsmoments; und
eine vierte Bestimmungseinheit, die mit der ersten Bestimmungseinheit, den Speichermitteln oder wahlweise der zweiten Bestimmungseinheit, und der dritten Bestimmungseinheit in Verbindung steht, um den Reibungskoeffizienten des Rades an der Schiene auf der Basis des Drehmomentgleichgewichts des Rades des Schienenfahrzeugs zu bestimmen, wobei die auf das Rad wirkende Gewichtskraft durch die erste Bestimmungseinheit bestimmt wird, der Radius des Rades und das Bremsmoment durch die dritte Bestimmungseinheit bestimmt wird,
wobei das Bremskrafterzeugungssystem zur Durchführung des Verfahrens nach einem der vorstehenden Ansprüche konfiguriert ist.

10. Eisenbahnfahrzeug nach Anspruch 9, ferner aufweisend mindestens eines der folgenden:

einer Verbindung von der vierten Bestimmungseinheit zum Fahrerstand des Eisenbahnfahrzeugs;
einer Anzeigevorrichtung zum Anzeigen des gemessenen und/oder ermittelten Reibungskoeffizienten; und
eine Verbindung von der vierten Bestimmungseinheit zum Verkehrsleiter oder Dispatcher.

11. Eisenbahnfahrzeug nach einem der Ansprüche 9 bis 10, ferner aufweisend ein Speichermedium zum Speichern des Reibungskoeffizienten, der von der vierten Bestimmungseinheit bestimmt wurde.

12. Eisenbahnfahrzeug nach einem der Ansprüche 9 bis 11, wobei die erste Bestimmungseinheit zur Bestimmung der auf das Rad wirkenden Gewichtskraft durch Messung des Luftfederdrucks des Rades konfiguriert ist.

**Revendications**

1. Procédé pour mesurer et/ou déterminer un coefficient d'adhérence entre une roue d'un véhicule ferroviaire et un rail, sur lequel le véhicule ferroviaire est entraîné ou se déplace, le coefficient d'adhérence étant mesuré et/ou déterminé lors du freinage ou de l'entraînement d'au moins un essieu monté du véhicule ferroviaire pendant le fonctionnement du véhicule ferroviaire,

   le coefficient d'adhérence étant déterminé sur la base de l'équilibre de couple de la roue du véhicule ferroviaire, le coefficient d'adhérence étant déterminé de manière cyclique en freinant ou en entraînant au moins un essieu monté du véhicule ferroviaire de manière cyclique, ledit essieu monté étant choisi de manière cyclique parmi un ensemble d'au moins deux essieux montés ;
   le procédé comprenant en outre l'utilisation d'au moins l'un des paramètres suivants comme paramètres d'entrée pour déterminer le coefficient d'adhérence : la force de poids agissant sur la roue ; le rayon de la roue ; et la force de freinage.

2. Procédé selon la revendication 1, selon lequel le coefficient d'adhérence est déterminé tout en freinant ou en entraînant seulement un essieu monté ou seulement deux essieux montés du véhicule ferroviaire pendant le fonctionnement du véhicule ferroviaire, ou tout en freinant ou en entraînant différemment un essieu monté tout en freinant tous les essieux montés.

3. Procédé selon l'une quelconque des revendications précédentes, comprenant en outre l'utilisation d'au moins l'un des paramètres suivants comme paramètres d'entrée pour déterminer le coefficient d'adhérence :
   la pression de suspension pneumatique ; la force de serrage de l'actionneur du frein, le rayon de frottement résultant et le couple moteur.

4. Procédé selon l'une quelconque des revendications précédentes, comprenant en outre

   la comparaison du coefficient d'adhérence mesuré et/ou déterminé à une valeur seuil, selon lequel notamment un signal de réponse est généré sur la base de la comparaison du coefficient d'adhérence à la valeur seuil ;
   l'évaluation du coefficient d'adhérence mesuré et/ou déterminé sur la base de la valeur seuil, et
   l'ajout d'une force de freinage supplémentaire au véhicule ferroviaire ou l'activation de systèmes améliorant l'adhérence, si le coefficient d'adhérence mesuré et/ou déterminé est inférieur à une valeur seuil, notamment par l'augmentation de la force de freinage du frein appliquée lors de la mesure et/ou de la détermination du coefficient d'adhérence ;
   l'utilisation d'un frein supplémentaire ou d'un système améliorant l'adhérence, p.ex. un frein de voie électromagnétique ; et
   le sablage.

5. Procédé selon l'une quelconque des revendications précédentes, comprenant en outre :

   le transfert du résultat du coefficient d'adhérence mesuré et/ou déterminé au conducteur du véhicule ferroviaire ; et/ou
   le fait de donner au conducteur du véhicule ferroviaire un signal pour des coefficients d'adhérence inhabituellement élevés et/ou inhabituellement bas comparé à au moins une valeur seuil, un coefficient d'adhérence inhabituellement élevé et/ou inhabituellement bas exigeant notamment une adaptation de la vitesse ou du moment du déclenchement des freins du véhicule ferroviaire, ou d'autres paramètres de fonctionnement du véhicule.

6. Procédé selon l'une quelconque des revendications précédentes, comprenant en outre

   le transfert et/ou l'enregistrement des données obtenues par la mesure et/ou la détermination du coefficient d'adhérence vers une unité de commande ;
   l'utilisation du coefficient d'adhérence pour établir une configuration de fonctionnement du véhicule ferroviaire, notamment pour prédire un comportement de freinage du véhicule ferroviaire ;
   le transfert et/ou l'enregistrement des données obtenues par la mesure et/ou la détermination du coefficient d'adhérence à une unité de commande à distance (p.ex. une unité de commande située à l'extérieur du véhicule ferroviaire), surtout pour l'agent de la circulation ou le répartiteur ;
   le mémorisation du coefficient d'adhérence mesuré et/ou déterminé sur une carte ferroviaire pour les véhicules ferroviaires suivants.

7.  Procédé selon l'une quelconque des revendications précédentes, dans lequel le freinage du véhicule ferroviaire pour mesurer et/ou déterminer le coefficient d'adhérence a lieu pendant un intervalle de temps inférieur à 5 s, typiquement inférieur à 3 s, plus typiquement inférieur à 2 s, plus typiquement inférieur à 1 s, et encore plus typiquement inférieur à 0,5 s.

8.  Procédé selon l'une quelconque des revendications précédentes, selon lequel le freinage du véhicule ferroviaire pour mesurer et/ou déterminer le coefficient d'adhérence est effectué à l'aide de moins de 10 % des freins présents dans le véhicule ferroviaire, notamment à l'aide de deux ensembles de freins du véhicule ferroviaire, notamment à l'aide de deux freins du véhicule ferroviaire ; et/ou
selon lequel le freinage du véhicule ferroviaire pour mesurer et/ou déterminer le coefficient d'adhérence est effectué de sorte que le véhicule ferroviaire ne subisse pas de freinage substantiel, p.ex. ne subissant pas de perte de vitesse substantielle, notamment ne subissant pas de perte de vitesse supérieure à 5 % de la vitesse réelle, typiquement 3 % de la vitesse réelle, et encore plus typiquement 2 % de la vitesse réelle, notamment ne subissant pas une performance de freinage supérieure à 6 pourcentage de freinage, plus typiquement à 5 pourcentage de freinage, plus typiquement à 3 pourcentage de freinage, et encore plus typiquement à 2 pourcentage de freinage, la vitesse réelle étant la vitesse avant la mesure et/ou la détermination du coefficient d'adhérence.

9.  Véhicule ferroviaire comportant un système de génération de force de freinage associé à un essieu monté ou à un bogie, comprenant :

une première unité de détermination pour déterminer la force de poids agissant sur une roue du véhicule ferroviaire ;
un moyen de mémorisation pour mémoriser le rayon de la roue, ou éventuellement une deuxième unité de détermination pour déterminer le rayon de la roue ;
une troisième unité de détermination pour déterminer le couple de freinage ; et
une quatrième unité de détermination étant en communication avec la première unité de détermination, le moyen de mémorisation ou, éventuellement la deuxième unité de détermination, et la troisième unité de détermination pour déterminer le coefficient d'adhérence de la roue au rail sur la base de l'équilibre de couple de la roue du véhicule ferroviaire, la force de poids sur la roue étant déterminée par la première unité de détermination, le rayon de la roue et le couple de freinage étant déterminés par la troisième unité de détermination, le système de génération de force de freinage étant configuré pour mettre en œuvre le procédé selon l'une quelconque des revendications précédentes.

10. Véhicule ferroviaire selon la revendication 9, comprenant en outre :

une ligne de communication entre la quatrième unité de détermination et la cabine du conducteur du véhicule ferroviaire ;
et/ou un dispositif d'affichage pour afficher le coefficient d'adhérence mesuré et/ou déterminé ; et/ou
une ligne de communication entre la quatrième unité de détermination et l'agent de la circulation ou le répartiteur.

11. Véhicule ferroviaire selon l'une quelconque des revendications 9 à 10, comprenant en outre un support de mémorisation pour mémoriser le coefficient d'adhérence déterminé par la quatrième unité de détermination.

12. Véhicule ferroviaire selon l'une quelconque des revendications 9 à 11, dans lequel la première unité de détermination est configurée pour déterminer la force de poids agissant sur la roue en mesurant la pression de suspension pneumatique de la roue.

| applicable slope | | for a permitted speed up to | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|
| in ‰ | at a ratio of | 20 | 25 | 30 | 35 | 40 | 45 | 50 | 55 | 60 | 65 | 70 | 75 | 80 | 85 | 90 | 95 | 100 | 105 | 110 | 115 | 120 | 125 | 130 | 135 | 140 | 145 | 150 | 155 | 160 |
| | | kilometer per hour (km/h) following minimium brake percentage are necessary: | | | | | | | | | | | | | | | | | | | | | | | | | | | |
| 0 | 1:∞ | 6 | 6 | 6 | 6 | 6 | 6 | 8 | 11 | 13 | 18 | 22 | 26 | 32 | 38 | 44 | 51 | 58 | 65 | 73 | 82 | 90 | 101 | 111 | 123 | 134 | 146 | 158 | 172 | 185 |
| 1 | 1:1000 | 6 | 6 | 6 | 6 | 6 | 7 | 9 | 12 | 15 | 19 | 23 | 28 | 33 | 39 | 46 | 52 | 60 | 67 | 75 | 83 | 92 | 102 | 113 | 124 | 136 | 148 | 160 | 173 | 187 |
| 2 | 1:500 | 6 | 6 | 6 | 6 | 6 | 8 | 10 | 13 | 16 | 20 | 24 | 29 | 34 | 41 | 47 | 54 | 61 | 68 | 76 | 85 | 94 | 104 | 115 | 126 | 138 | 150 | 162 | 175 | 189 |
| 3 | 1:333 | 6 | 6 | 6 | 6 | 7 | 9 | 11 | 14 | 17 | 21 | 26 | 30 | 36 | 42 | 49 | 55 | 63 | 70 | 78 | 87 | 96 | 106 | 116 | 128 | 140 | 151 | 164 | 177 | 191 |
| 4 | 1:250 | 6 | 6 | 6 | 6 | 8 | 10 | 12 | 15 | 18 | 23 | 27 | 32 | 37 | 44 | 50 | 57 | 64 | 72 | 80 | 88 | 98 | 107 | 118 | 129 | 141 | 153 | 166 | 179 | 192 |
| 5 | 1:200 | 6 | 6 | 6 | 7 | 9 | 11 | 13 | 16 | 20 | 24 | 28 | 33 | 39 | 45 | 52 | 58 | 66 | 73 | 82 | 90 | 99 | 109 | 120 | 131 | 143 | 155 | 167 | 180 | 194 |
| 6 | 1:167 | 6 | 6 | 7 | 8 | 10 | 12 | 14 | 17 | 21 | 25 | 30 | 35 | 40 | 46 | 53 | 60 | 67 | 75 | 83 | 92 | 101 | 111 | 122 | 133 | 145 | 157 | 169 | 182 | 196 |
| 7 | 1:143 | 6 | 7 | 8 | 9 | 11 | 13 | 15 | 19 | 22 | 26 | 31 | 36 | 41 | 48 | 54 | 61 | 69 | 76 | 85 | 94 | 103 | 112 | 123 | 135 | 147 | 158 | 171 | 184 | 198 |
| 8 | 1:125 | 6 | 7 | 9 | 10 | 12 | 14 | 16 | 20 | 23 | 28 | 32 | 37 | 43 | 49 | 56 | 63 | 70 | 78 | 86 | 95 | 105 | 114 | 125 | 136 | 148 | 160 | 173 | 186 | 200 |
| 9 | 1:111 | 7 | 8 | 10 | 11 | 13 | 15 | 17 | 21 | 25 | 29 | 34 | 39 | 45 | 51 | 58 | 65 | 72 | 80 | 88 | 97 | 107 | 116 | 127 | 138 | 150 | 162 | 174 | 188 | 201 |
| 10 | 1:100 | 8 | 9 | 10 | 12 | 14 | 16 | 18 | 22 | 26 | 30 | 35 | 40 | 46 | 52 | 59 | 66 | 74 | 81 | 90 | 99 | 108 | 117 | 128 | 140 | 152 | 164 | 176 | 189 | 203 |
| 11 | 1:91 | 9 | 10 | 11 | 13 | 15 | 17 | 20 | 23 | 27 | 32 | 37 | 42 | 47 | 54 | 61 | 68 | 76 | 83 | 92 | 101 | 110 | 119 | 130 | 141 | 154 | 165 | 178 | 191 | 205 |
| 12 | 1:83 | 10 | 11 | 12 | 14 | 16 | 18 | 21 | 24 | 28 | 33 | 38 | 43 | 48 | 55 | 62 | 69 | 77 | 85 | 93 | 102 | 112 | 121 | 132 | 143 | 155 | 167 | 180 | 193 | 207 |
| 12,5 | 1:80 | 11 | 12 | 13 | 15 | 17 | 19 | 22 | 25 | 29 | 34 | 39 | 44 | 49 | 56 | 63 | 70 | 78 | 86 | 94 | 103 | 113 | 122 | 133 | 144 | 156 | 168 | 180 | 194 | 208 |
| 13 | 1:77 | 11 | 12 | 13 | 15 | 17 | 19 | 22 | 26 | 30 | 34 | 39 | 45 | 50 | 57 | 64 | 71 | 79 | 87 | 95 | 104 | 114 | 122 | 133 | 145 | 157 | 169 | 181 | 195 | 209 |
| 14 | 1:71 | 12 | 13 | 14 | 16 | 18 | 20 | 23 | 27 | 31 | 35 | 40 | 46 | 52 | 58 | 65 | 72 | 80 | 89 | 97 | 106 | 116 | 124 | 135 | 147 | 159 | 171 | 183 | 196 | 210 |
| 15 | 1:67 | 12 | 13 | 14 | 16 | 18 | 21 | 24 | 28 | 32 | 36 | 41 | 47 | 53 | 59 | 66 | 73 | 81 | 90 | 98 | 107 | 117 | 126 | 137 | 148 | 160 | 172 | 185 | 198 | 212 |
| 16 | 1:63 | 13 | 14 | 15 | 17 | 19 | 22 | 25 | 29 | 33 | 38 | 43 | 49 | 54 | 61 | 68 | 75 | 83 | 92 | 100 | 109 | 119 | 127 | 138 | 150 | 162 | - | - | - | - |
| 17 | 1:59 | 13 | 15 | 16 | 18 | 20 | 23 | 26 | 30 | 34 | 39 | 44 | 50 | 55 | 62 | 69 | 76 | 84 | 93 | 101 | 111 | 121 | 129 | 140 | 152 | 164 | - | - | - | - |
| 18 | 1:56 | 14 | 16 | 17 | 19 | 21 | 25 | 28 | 32 | 36 | 41 | 46 | 52 | 57 | 64 | 71 | 78 | 86 | 95 | 103 | 113 | 123 | 131 | 142 | 153 | 166 | - | - | - | - |
| 19 | 1:53 | 15 | 17 | 18 | 20 | 22 | 26 | 29 | 33 | 37 | 42 | 47 | 53 | 59 | 66 | 73 | 80 | 88 | 97 | 105 | 115 | 125 | 132 | 144 | 155 | 167 | - | - | - | - |
| 20 | 1:50 | 16 | 17 | 19 | 21 | 23 | 27 | 30 | 34 | 38 | 43 | 48 | 54 | 60 | 67 | 74 | 81 | 89 | 98 | 107 | 116 | 127 | 134 | 145 | 157 | 169 | - | - | - | - |
| 21 | 1:48 | 17 | 18 | 20 | 22 | 24 | 28 | 31 | 35 | 40 | 45 | 50 | 56 | 62 | 69 | 75 | 83 | 91 | 100 | 109 | 118 | 129 | 136 | 147 | - | - | - | - | - | - |
| 22 | 1:45 | 18 | 19 | 21 | 23 | 25 | 29 | 32 | 36 | 41 | 46 | 51 | 57 | 63 | 70 | 76 | 84 | 92 | 101 | 111 | 120 | 131 | 138 | 149 | - | - | - | - | - | - |
| 23 | 1:43 | 19 | 20 | 22 | 24 | 26 | 30 | 33 | 38 | 43 | 48 | 53 | 59 | 65 | 72 | 78 | 86 | 94 | 103 | 113 | 122 | 133 | 139 | 150 | - | - | - | - | - | - |
| 24 | 1:42 | 20 | 21 | 23 | 25 | 27 | 31 | 34 | 39 | 44 | 49 | 54 | 60 | 66 | 73 | 80 | 88 | 96 | 105 | - | - | - | - | - | - | - | - | - | - | - |
| 25 | 1:40 | 20 | 22 | 24 | 26 | 28 | 32 | 35 | 40 | 45 | 50 | 55 | 61 | 67 | 74 | 81 | 89 | 97 | 106 | - | - | - | - | - | - | - | - | - | - | - |
| 26 | 1:38 | 21 | 23 | 25 | 27 | 29 | 33 | 37 | 42 | 46 | 52 | 57 | 63 | 69 | 76 | 83 | 91 | 99 | 108 | - | - | - | - | - | - | - | - | - | - | - |
| 27 | 1:37 | 22 | 23 | 25 | 28 | 30 | 34 | 38 | 43 | 47 | 53 | 58 | 64 | 70 | 77 | 84 | 92 | 101 | 110 | - | - | - | - | - | - | - | - | - | - | - |
| 28 | 1:36 | 23 | 24 | 26 | 29 | 31 | 35 | 39 | 44 | 49 | 55 | 60 | 66 | 72 | 79 | 85 | 94 | 103 | 112 | - | - | - | - | - | - | - | - | - | - | - |
| 29 | 1:34 | 24 | 25 | 27 | 30 | 32 | 36 | 40 | 45 | 50 | 56 | 61 | 67 | 74 | 81 | 86 | 96 | 105 | 114 | - | - | - | - | - | - | - | - | - | - | - |
| 30 | 1:33 | 24 | 26 | 28 | 31 | 33 | 37 | 41 | 46 | 51 | 57 | 62 | 68 | 75 | 82 | 87 | 97 | 106 | 115 | - | - | - | - | - | - | - | - | - | - | - |

Fig. 1

Fig. 2

Fig. 3

Fig. 4

Fig. 5

Fig. 6

Fig. 7

26

Fig. 8

Fig. 9

Fig. 10

Wheel-rail-combination

Rotational speed n'
drive torque M' t
brake torque M' B

Wheel set

Rotational speed n'
drive torque M' t
brake torque M' B

Brake torque MB, d

Transmission

Rotational speed n
drive torque Mt
brake torque MB,m

Vehicle body

Brake device

Three-phase
motor

Air springing

Brake cylinder
force
Fc

Three-phase
AC current I

Pressure
pt

Piston

Motor power
converter module

Secondary spring
pressure valve

Spring pressure
sensor

Velocity sensor

Pressure pc

DC voltage U

Velocity sensor

Measurement
voltage u

Pressure p

Brake pressure valve

Mains power
converter module

Brake pressure
sensor

Power meter

Measurement
voltage u

Measurement
voltage u

Measurement
voltage u

Pressurized air supply

Electrical power
supply

AC voltage U

Measurement
voltage u

Measurement
voltage u

CPU

Input

Output

Control voltage U

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013034698 A2

**Non-patent literature cited in the description**

- **ROLLING M.** *Bremsen im Betrieb bedienen und prüfen, Richtlinie 91501,* 11 December 2011
- **SAUMWEBER E.** Grundlagen der Schienenfahrzeugbremse, AET 43. Hestra Verlag, 1989
- **KÖLLING M.** *Bremsen im Betrieb bedienen und prüfen, Richtlinie 91501,* 11 December 2011
- **MINDE F.** Schienenfahrzeugtechnik. *Grundlagen der Eisenbahnbremstechnik,* 2007